(19) Europäisches Patentamt / European Patent Office / Office européen des brevets

(11) **EP 4 473 038 B1**

(12) **EUROPEAN PATENT SPECIFICATION**

(45) Date of publication and mention of the grant of the patent:
**11.03.2026 Bulletin 2026/11**

(21) Application number: **23701785.0**

(22) Date of filing: **27.01.2023**

(51) International Patent Classification (IPC):
***C08G 65/48*** (2006.01) ***C11D 1/00*** (2006.01)
***C08G 64/02*** (2006.01) ***C08G 64/18*** (2006.01)
***C08G 64/30*** (2006.01) ***C08G 64/42*** (2006.01)

(52) Cooperative Patent Classification (CPC):
**C08G 65/48; C08G 64/0241; C08G 64/183; C08G 64/305; C08G 64/42; C11D 3/3703**

(86) International application number:
**PCT/EP2023/051961**

(87) International publication number:
**WO 2023/148086 (10.08.2023 Gazette 2023/32)**

(54) **COMPOSITIONS COMPRISING POLYMERS, POLYMERS, AND THEIR USE**

ZUSAMMENSETZUNGEN MIT POLYMEREN, POLYMERE UND DEREN VERWENDUNG

COMPOSITIONS COMPRENANT DES POLYMÈRES, POLYMÈRES ET LEUR UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.02.2022 EP 22155276**

(43) Date of publication of application:
**11.12.2024 Bulletin 2024/50**

(73) Proprietor: **BASF SE**
**67056 Ludwigshafen am Rhein (DE)**

(72) Inventors:
- **WILLERSINN, Jochen Eckhard**
  **67056 Ludwigshafen (DE)**
- **GARCIA CASTRO, Ivette**
  **67056 Ludwigshafen (DE)**
- **HUEFFER, Stephan**
  **67056 Ludwigshafen (DE)**

(74) Representative: **BASF IP Association**
**BASF SE**
**GBI - Z078**
**67056 Ludwigshafen (DE)**

(56) References cited:
**WO-A1-2021/105336** **WO-A1-2022/008416**
**US-A1- 2016 009 860**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 473 038 B1

## Description

The present invention is directed towards a detergent composition comprising

(A) at least one polymer comprising

(a) a core that bears one to 50 moieties of the general formula (I),

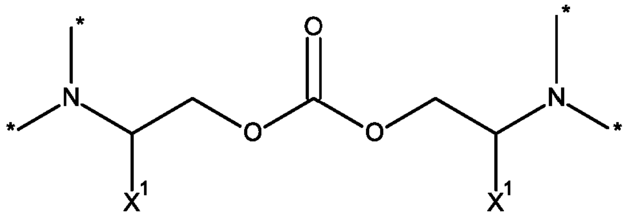

(I)

and groups of the general formula

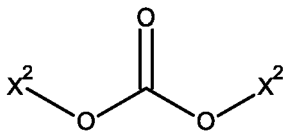

(II)

wherein the asterisk stands for another group according to general formula (I), linked though $X^2$, or for $C_1$-$C_4$-alkyl, or for a group according to formula (II), or for a polyalkylene oxide chain (b),

wherein $X^1$ are same or different and selected from $C_1$-$C_2$-alkyl and hydrogen,

wherein $X^2$ are same of different and selected from $C_2$-$C_6$-alkylene, straight-chain or branched, non-substituted or substituted with one or more hydroxyl groups, esters of carboxylic acids, or ether groups,

(b) polyalkylene oxide chains.

Furthermore, the present invention is directed to polymers (A) and a process to make such polymers (A).

Laundry detergents have to fulfil several requirements. They need to remove all sorts of soiling from laundry, for example all sorts of pigments, clay, fatty soil, and dyestuffs including dyestuff from food and drinks such as red wine, tea, coffee, and fruit including berry juices. Laundry detergents also need to exhibit a certain storage stability. Especially laundry detergents that are liquid or that contain hygroscopic ingredients often lack a good storage stability, e.g., enzymes tend to be deactivated. WO2022/008416A1 and WO2021/105336A1 disclose compositions used for laundry care or hard surface cleaning comprising a modified polyether.

Fatty soilings are still a challenge in laundering. Although numerous suggestions for removal have been made - polymers, enzymes, surfactants - solutions that work well are still of interest. It has been suggested to use a lipase to support fat removal but many builders - especially in liquid laundry detergents - do not work well with lipase.

In addition, greying of laundry is still a significant problem. The greying is assigned to re-deposition of soil during washing. In order to reduce redeposition of soil, specific native or modified polysaccharides such as polysaccharides treated with gaseous or liquid $SO_2$ have been developed. Numerous ingredients have been suggested with various structures, see, e.g., WO 2015/091160, EP 3 266 858 A1 and EP 3 226 858 A1, but still leave room for improvement, and the anti-greying performance of such compounds is still not sufficient. Therefore, there is a continuous need for improved anti-greying agents which can be used in a laundry process. In particular, it is desirable to provide an anti-greying agent which reduces greying of a washed fabric. Several polymers as additives have been suggested. However, many of them suffer from a quick degradation and thus a reduced shelf life.

It was therefore an objective to provide a detergent composition that fulfils the requirements discussed above. It was further an objective to provide ingredients that fulfil the above requirements, and it was an objective to provide a process to make such ingredients and detergent compositions.

Accordingly, the detergent compositions defined at the outset have been found, hereinafter also referred to as inventive compositions or compositions according to the present invention. Inventive compositions contain at least one polymer (A) that comprises a core (a) and side chains (b). Polymer (A) and detergent compositions comprising polymer (A)

will be described in more detail below.

Polymer (A) comprises

(a) core that bears one to 50, preferably 3 to 25 moieties of the general formula (I),

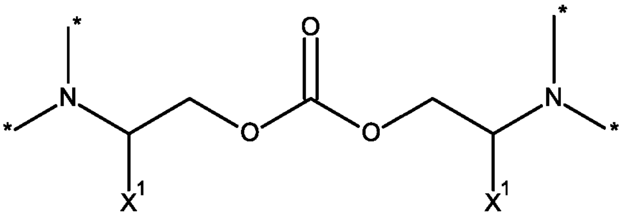

(I)

and groups of the general formula

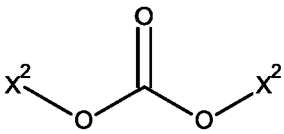

(II)

wherein the asterisk stands for another group according to general formula (I), linked though $X^2$, or for $C_1$-$C_4$-alkyl, for example methyl, ethyl, isopropyl, n-propyl, n-butyl, iso-butyl or sec.-butyl, methyl being preferred $C_1$-$C_4$-alkyl,

or the asterisk stands for a group according to formula (II), or for a polyalkylene oxide chain (b),

wherein $X^1$ are different or preferably same and selected from hydrogen and $C_1$-$C_2$-alkyl, preferably the majority of all $X^1$ are hydrogen, and even more preferably all $X^1$ are hydrogen,

wherein $X^2$ are same of different and selected from $C_2$-$C_6$-alkylene, straight-chain or branched, non-substituted or substituted with one or more hydroxyl groups, preferably tertiary hydroxyl groups, with ester groups of carboxylic acids, for example $COOCH_3$, $COOC_2H_5$, or ether groups, for example $-OCH_3$ or $-OC_2H_5$. Examples of straight-chain $C_2$-$C_6$-alkylene are $-(CH_2)_2-$, $-(CH_2)_3-$, $-(CH_2)_4-$, $-(CH_2)_5-$ and $-(CH_2)_6-$, examples of substituted are residues based on citric acid, $-CH_2-C(OH)(COO-)-CH_2-$

(b) polyalkylene oxide chains.

Said polyalkylene oxide side chains may be derived from $C_2$-$C_4$-alkylene oxide. Examples of $C_2$-$C_4$-alkylene oxides are ethylene oxide ("EO"), propylene oxide ("PO"), butylene oxide ("BuO"), and mixtures of at least two of the foregoing, for example ethylene oxide and propylene oxide or ethylene oxide and butylene oxide. Preferred are propylene oxide and ethylene oxide, more preferred is ethylene oxide.

In a preferred embodiment, the numerical majority of alkylene oxide in polyalkylene oxide chains (b) is EO and the rest PO or BU. In a more preferred embodiment, all the alkylene oxide in polyalkylene oxide chains (b) is EO.

In one embodiment of the present invention, the weight ratio of core (a) to polyalkylene oxide chains (b) in polymer (A) is in the range of from 1 to 100 up to 1 to 2, preferred are 1 to 40 up to 1 to 3.

In one embodiment of the present invention, polymer (A) additionally comprises groups according to the formula $(CH_2)_{z1}$-$[N(CH_2)_{z2}]_{z4}$-$N(CH_2)_{z3}$-, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups, and wherein the free valences of the N-atoms bear chains (b). Said additional groups then constitute a part of the core (a).

Preferably, the variables are selected as follows: z1 and z3 are both 3, z2 is 2 and z4 is 1, or: z1 is 2, z4 is zero and z3 is 3, and z2 is from 2 to 4.

In one embodiment of the present invention, the numerical ratio of groups according to formula (I) and groups according to formula $(CH_2)_{z1}$-$[N(CH_2)_{z2}]_{z4}$-$N(CH_2)_{z3}$- is in the range of from 2:1 to 6:1.

Polyalkylene oxide chains (b) may bear a hydrogen atom at the end (so-called non-capped), or they may be capped with $C_1$-$C_{10}$-alkyl, especially with methyl, or with $-SO_3Na$.

In one embodiment of the present invention, the average molecular weight $M_w$ of polymer (A) is at least 1,500

g/mol, preferably in the range of from 2,500 to 80,000 g/mol. The average molecular weight may be determined by gel permeation chromatography ("GPC"), in 0.1 M aqueous NaCl solution containing 0.05 % by weight trifluoroacetic acid potassium salt as mobile phase, or in hexafluoroisopropanol ("HFIP") containing 0.05 % by weight trifluoroacetic acid potassium salt as mobile phase, each time preferably with TSKgel as stationary phase.

In one embodiment of the present invention, the polydispersity $Q = M_w/M_n$ of polymer (A) is in the range of from 1 to 10, preferably 1.5 to 6.

In one embodiment of the present invention, polymer (A) has a Hazen colour number in the range of from 20 to 500, determined in a 10 % by weight aqueous solution.

In one embodiment of the present invention, polymer (A) has an OH value, measured according to DIN 53240 (2013), in the range of from 1 to 1000, preferably 5 to 350 mg KOH/g polymer (A).

In one embodiment of the present invention, inventive compositions comprise at least one enzyme. Enzymes are identified by polypeptide sequences (also called amino acid sequences herein). The polypeptide sequence specifies the three-dimensional structure including the "active site" of an enzyme which in turn determines the catalytic activity of the same. Polypeptide sequences may be identified by a SEQ ID NO. According to the World Intellectual Property Office (WIPO) Standard ST.25 (1998) the amino acids herein are represented using three-letter code with the first letter as a capital or the corresponding one letter.

Any enzyme according to the invention relates to parent enzymes and/or variant enzymes, both having enzymatic activity. Enzymes having enzymatic activity are enzymatically active or exert enzymatic conversion, meaning that enzymes act on substrates and convert these into products. The term "enzyme" herein excludes inactive variants of an enzyme.

A "parent" sequence (of a parent protein or enzyme, also called "parent enzyme") is the starting sequence for introduction of changes (e.g., by introducing one or more amino acid substitutions, insertions, deletions, or a combination thereof) to the sequence, resulting in "variants" of the parent sequences. The term parent enzyme (or parent sequence) includes wild-type enzymes (sequences) and synthetically generated sequences (enzymes) which are used as starting sequences for introduction of (further) changes.

The term "enzyme variant" or "sequence variant" or "variant enzyme" refers to an enzyme that differs from its parent enzyme in its amino acid sequence to a certain extent. If not indicated otherwise, variant enzyme "having enzymatic activity" means that this variant enzyme has the same type of enzymatic activity as the respective parent enzyme.

In describing the variants of the present invention, the nomenclature described as follows is used:
Amino acid substitutions are described by providing the original amino acid of the parent enzyme followed by the number of the position within the amino acid sequence, followed by the substituted amino acid. Amino acid deletions are described by providing the original amino acid of the parent enzyme followed by the number of the position within the amino acid sequence, followed by *. Amino acid insertions are described by providing the original amino acid of the parent enzyme followed by the number of the position within the amino acid sequence, followed by the original amino acid and the additional amino acid. For example, an insertion at position 180 of lysine next to glycine is designated as "Gly180GlyLys" or "G180GK". In cases where a substitution and an insertion occur at the same position, this may be indicated as S99SD+S99A or in short S99AD. In cases where an amino acid residue identical to the existing amino acid residue is inserted, degeneracy in the nomenclature arises. If for example a glycine is inserted after the glycine in the above example this would be indicated by G180GG. Where different alterations can be introduced at a position, the different alterations are separated by a comma, e.g. "Arg170Tyr, Glu" represents a substitution of arginine at position 170 with tyrosine or glutamic acid. Alternatively, different alterations or optional substitutions may be indicated in brackets e.g. Arg170[Tyr, Gly] or Arg170{Tyr, Gly}; or in short R170 [Y,G] or R170 {Y, G}; or in long R170Y, R170G.

Enzyme variants may be defined by their sequence identity when compared to a parent enzyme. Sequence identity usually is provided as "% sequence identity" or "% identity". For calculation of sequence identities, in a first step a sequence alignment has to be produced. According to this invention, a pairwise global alignment has to be produced, meaning that two sequences have to be aligned over their complete length, which is usually produced by using a mathematical approach, called alignment algorithm. According to the invention, the alignment is generated by using the algorithm of Needleman and Wunsch (J. Mol. Biol. (1979) 48, p. 443-453). Preferably, the program "NEEDLE" (The European Molecular Biology Open Software Suite (EMBOSS)) is used for the purposes of the current invention, with using the programs default parameter (gap open=10.0, gap extend=0.5 and matrix=EBLOSUM62).

According to this invention, the following calculation of %-identity applies: %-identity = (identical residues / length of the alignment region which is showing the respective sequence of this invention over its complete length) *100.

According to this invention, enzyme variants may be described as an amino acid sequence which is at least n% identical to the amino acid sequence of the respective parent enzyme with "n" being an integer between 10 and 100. In one embodiment, variant enzymes are at least 70%, at least 75%, at least 80%, at least 81%, at least 83%, at least 84%, at least 85%, at least 86%, at least 87%, at least 88%, at least 89%, at least 90%, at least 92%, at least 93%, at least 94%, at least 95%, at least 96%, at least 97%, at least 98%, or at least 99% identical when compared to the full-length amino acid sequence of the parent enzyme, wherein the enzyme variant has enzymatic activity.

"Enzymatic activity" means the catalytic effect exerted by an enzyme, which usually is expressed as units per milligram of enzyme (specific activity) which relates to molecules of substrate transformed per minute per molecule of enzyme (molecular activity). Variant enzymes may have enzymatic activity according to the present invention when said enzyme variants exhibit at least 20%, at least 25%, at least 30%, at least 35%, at least 40%, at least 45%, at 10 least 50%, at least 55%, at least 60%, at least 65%, at least 70%, at least 75%, at least 80%, at least 85%, at least 90%, at least 95%, or 100% of the enzymatic activity of the respective parent enzyme.

In one embodiment, enzyme is selected from hydrolases, preferably from proteases, amylases, lipases, cellulases, and mannanases.

In one embodiment of the present invention, inventive compositions comprise

(A) at least one hydrolase, hereinafter also referred to as hydrolase (B), preferably selected from lipases, hereinafter also referred to as lipase (B).

"Lipases", "lipolytic enzyme", "lipid esterase", all refer to enzymes of EC class 3.1.1 ("carboxylic ester hydrolase"). Such a lipase (B) may have lipase activity (or lipolytic activity; triacylglycerol lipase, EC 3.1.1.3), cutinase activity (EC 3.1.1.74; enzymes having cutinase activity may be called cutinase herein), sterol esterase activity (EC 3.1.1.13) and/or wax-ester hydrolase activity (EC 3.1.1.50). Lipases (B) include those of bacterial or fungal origin.

Commercially available lipase (B) include but are not limited to those sold under the trade names Lipolase™, Lipex™, Lipolex™ and Lipoclean™ (Novozymes A/S), Preferenz™ L (DuPont), Lumafast (originally from Genencor) and Lipomax (Gist-Brocades/ now DSM).

In one aspect of the present invention, lipase (B) is selected from the following: lipases from *Hu-micola* (synonym *Thermomyces),* e.g. from H. *lanuginosa (T. lanuginosus)* as described in EP 258068, EP 305216, WO 92/05249 and WO 2009/109500 or from H. *insolens* as described in WO 96/13580; lipases derived from *Rhizomucor miehei* as described in WO 92/05249; lipase from strains of *Pseudomonas* (some of these now renamed to *Burkholderia),* e.g. from *P. alcaligenes* or *P. pseudoalcaligenes* (EP 218272, WO 94/25578, WO 95/30744, WO 95/35381, WO 96/00292), *P. cepacia* (EP 331376), *P. stutzeri* (GB 1372034), *P. fluorescens, Pseudomonas sp.* strain SD705 (WO 95/06720 and WO 96/27002), *P. wisconsinensis* (WO 96/12012), *Pseudomonas mendocina* (WO 95/14783), *P. glumae* (WO 95/35381, WO 96/00292); lipase from *Streptomyces griseus* (WO 2011/150157) and *S. pristinaespiralis* (WO 2012/137147), GDSL-type *Streptomyces* lipases (WO 2010/065455); lipase from *Thermobifida fusca* as disclosed in WO 2011/084412; lipase from *Geobacillus stearothermophilus* as disclosed in WO 2011/084417; *Bacillus* lipases, e.g. as disclosed in WO 00/60063, lipases from *B. subtilis* as disclosed in Dartois et al. (1992), Biochemica et Biophysica Acta, 1131, 253-360 or WO 2011/084599, *B. stearothermophilus* (JP S64-074992) or *B. pumilus* (WO 91/16422); lipase from *Candida antarctica* as disclosed in WO 94/01541. Suitable lipases (B) include also those which are variants of the above described lipases which have lipolytic activity.

Suitable lipases (B) include also those that are variants of the above described lipases which have lipolytic activity. Suitable lipase variants include variants with at least 40 to 100% identity when compared to the full length polypeptide sequence of the parent enzyme as disclosed above. In one embodiment lipase variants having lipolytic activity may be at least 40%, at least 45%, at least 50%, at least 55%, at least 60%, at least 65%, at least 70%, at least 75%, at least 80%, at least 85%, at least 90%, at least 92%, at least 93%, at least 94%, at least 95%, at least 96%, at least 97%, at least 98% or at least 99% identical when compared to the full length polypeptide sequence of the parent enzyme as disclosed above.

Lipases (B) have "lipolytic activity". The methods for determining lipolytic activity are well-known in the literature (see e.g. Gupta et al. (2003), Biotechnol. Appl. Biochem. 37, p. 63-71). E.g. the lipase activity may be measured by ester bond hydrolysis in the substrate para-nitrophenyl palmitate (pNP-Palmitate, C:16) and releases pNP which is yellow and can be detected at 405 nm.

In one embodiment, lipase (B) is selected from fungal triacylglycerol lipase (EC class 3.1.1.3). Fungal triacylglycerol lipase may be selected from lipases of *Thermomyces lanuginosa.* In one embodiment, at least one *Thermomyces lanuginosa* lipase is selected from triacylglycerol lipase according to amino acids 1-269 of SEQ ID NO: 2 of US5869438 and variants thereof having lipolytic activity.

*Thermomyces lanuginosa* lipase may be selected from variants having lipolytic activity which are at least 90%, at least 91%, at least 92%, at least 93%, at least 94%, at least 95%, at least 96%, at least 97%, at least 98% or at least 99% identical when compared to the full length polypeptide sequence of amino acids 1-269 of SEQ ID NO: 2 of US 5,869,438.

*Thermomyces lanuginosa* lipase may be selected from variants having lipolytic activity comprising conservative mutations only, which do not pertain the functional domain of amino acids 1-269 of SEQ ID NO: 2 of US 5,869,438. Lipase variants of this embodiment having lipolytic activity may be at least 95%, at least 96%, at least 97%, at least 98% or at least 99% similar when compared to the full length polypeptide sequence of amino acids 1-269 of SEQ ID NO: 2 of US 5,869,438.

*Thermomyces lanuginosa* lipase may be selected from variants having lipolytic activity comprising at least the

following amino acid substitutions when compared to amino acids 1-269 of SEQ ID NO: 2 of US 5,869,438: T231R and N233R. Said lipase variants may further comprise one or more of the following amino acid exchanges when compared to amino acids 1-269 of SEQ ID NO: 2 of US 5,869,438: Q4V, V60S, A150G, L227G, P256K.

*Thermomyces lanuginosa* lipase may be selected from variants having lipolytic activity comprising at least the amino acid substitutions T231R, N233R, Q4V, V60S, A150G, L227G, P256K within the polypeptide sequence of amino acids 1-269 of SEQ ID NO: 2 of US 5,869,438and are at least 95%, at least 96%, or at least 97% similar when compared to the full length polypeptide sequence of amino acids 1-269 of SEQ ID NO: 2 of US 5,869,438.

*Thermomyces lanuginosa* lipase may be selected from variants having lipolytic activity comprising the amino acid substitutions T231R and N233R within amino acids 1-269 of SEQ ID NO: 2 of US5869438 and are at least 95%, at least 96%, at least 97%, at least 98%, or at least 99% similar when compared to the full length polypeptide sequence of amino acids 1-269 of SEQ ID NO: 2 of US 5,869,438.

*Thermomyces lanuginosa* lipase may be a variant of amino acids 1-269 of SEQ ID NO: 2 of US5869438 having lipolytic activity, wherein the variant of amino acids 1-269 of SEQ ID NO: 2 of US 5,869,438is characterized in containing the amino acid substitutions T231R and N233R. Said lipase may be called Lipex herein.

In one embodiment of the present invention, a combination of at least two of the foregoing lipases (B) may be used.

In one embodiment of the present invention, lipases (B) are included in inventive composition in such an amount that a finished inventive composition has a lipolytic enzyme activity in the range of from 100 to 0.005 LU/mg, preferably 25 to 0.05 LU/mg of the composition. A Lipase Unit (LU) is that amount of lipase which produces 1 μmol of titratable fatty acid per minute in a pH stat. under the following conditions: temperature 30° C.; pH=9.0; substrate is an emulsion of 3.3 wt. % of olive oil and 3.3% gum arabic, in the presence of 13 mmol/l $Ca^{2+}$ and 20 mmol/l NaCl in 5 mmol/l Tris-buffer.

In one embodiment of the present invention, inventive compositions comprise

(D) at least one protease (D), hereinafter also referred to as protease (D).

In one embodiment, at least one protease (D) is selected from the group of serine endopeptidases (EC 3.4.21), most preferably selected from the group of subtilisin type proteases (EC 3.4.21.62). Serine proteases or serine peptidases are characterized by having a serine in the catalytically active site, which forms a covalent adduct with the substrate during the catalytic reaction. A serine protease in the context of the present invention may be selected from the group consisting of chymotrypsin (e.g., EC 3.4.21.1), elastase (e.g., EC 3.4.21.36), elastase (e.g., EC 3.4.21.37 or EC 3.4.21.71), granzyme (e.g., EC 3.4.21.78 or EC 3.4.21.79), kallikrein (e.g., EC 3.4.21.34, EC 3.4.21.35, EC 3.4.21.118, or EC 3.4.21.119,) plasmin (e.g., EC 3.4.21.7), trypsin (e.g., EC 3.4.21.4), thrombin (e.g., EC 3.4.21.5), and subtilisin. Subtilisin is also known as sub-tilopeptidase, e.g., EC 3.4.21.62, the latter hereinafter also being referred to as "subtilisin". The subtilisin related class of serine proteases shares a common amino acid sequence defining a catalytic triad which distinguishes them from the chymotrypsin related class of serine proteases. Subtilisins and chymotrypsin related serine proteases both have a catalytic triad comprising aspartate, histidine and serine.

Proteases are active proteins exerting "protease activity" or "proteolytic activity". Proteolytic activity is related to the rate of degradation of protein by a protease or proteolytic enzyme in a defined course of time.

The methods for analyzing proteolytic activity are well-known in the literature (see e.g. Gupta et al. (2002), Appl. Microbiol. Biotechnol. 60: 381-395). Proteolytic activity may be determined by using Succinyl-Ala-Ala-Pro-Phe-p-nitroanilide (Suc-AAPF-pNA, short AAPF; see e.g. DelMar et al. (1979), Analytical Biochem 99, 316-320) as substrate. pNA is cleaved from the substrate molecule by proteolytic cleavage, resulting in release of yellow color of free pNA which can be quantified by measuring $OD_{405}$.

Proteolytic activity may be provided in units per gram enzyme. For example, 1 U protease may correspond to the amount of protease which sets free 1 μmol folin-positive amino acids and peptides (as tyrosine) per minute at pH 8.0 and 37°C (casein as substrate).

Proteases of the subtilisin type (EC 3.4.21.62) may be bacterial proteases originating from a microorganism selected from *Bacillus, Clostridium, Enterococcus, Geobacillus, Lactobacillus, Lac-tococcus, Oceanobacillus, Staphylococcus, Streptococcus,* or *Streptomyces* protease, or a Gram-negative bacterial polypeptide such as a *Campylobacter, E. coli, Flavobacterium, Fuso-bacterium, Helicobacter, Ilyobacter, Neisseria, Pseudomonas, Salmonella,* and *Ureaplasma.*

In one aspect of the invention, at least one protease (D) is selected from *Bacillus alcalophilus, Bacillus amyloliquefaciens, Bacillus brevis, Bacillus circulans, Bacillus clausii, Bacillus coagu-lans, Bacillus firmus, Bacillus gibsonii, Bacillus lautus, Bacillus lentus, Bacillus licheniformis, Bacillus megaterium, Bacillus pumilus, Bacillus sphaericus, Bacillus stearothermophilus, Bacillus subtilis,* or *Bacillus thuringiensis* protease.

In one embodiment of the present invention, at least one protease (D) is selected from the following: subtilisin from *Bacillus amyloliquefaciens* BPN' (described by Vasantha et al. (1984) J. Bacteriol. Volume 159, p. 811-819 and JA Wells et al. (1983) in Nucleic Acids Research, Volume 11, p. 7911-7925); subtilisin from *Bacillus licheniformis* (subtilisin Carlsberg; disclosed in EL Smith et al. (1968) in J. Biol Chem, Volume 243, pp. 2184-2191, and Jacobs et al. (1985) in Nucl. Acids Res, Vol 13, p. 8913-8926); subtilisin PB92 (original sequence of the alkaline protease PB92 is described in EP

283075 A2); subtilisin 147 and/or 309 (Esperase®, Savinase®, respectively) as disclosed in WO 89/06279; subtilisin from *Bacillus lentus* as disclosed in WO 91/02792, such as from *Bacillus lentus* DSM 5483 or the variants of *Bacillus lentus* DSM 5483 as described in WO 95/23221; subtilisin from *Bacillus alcalophilus* (DSM 11233) disclosed in DE 10064983; subtilisin from *Bacillus gibsonii* (DSM 14391) as disclosed in WO 2003/054184; subtilisin from *Bacillus sp.* (DSM 14390) disclosed in WO 2003/056017; subtilisin from *Bacillus sp.* (DSM 14392) disclosed in WO 2003/055974; subtilisin from *Bacillus gibsonii* (DSM 14393) disclosed in WO 2003/054184; subtilisin having SEQ ID NO: 4 as described in WO 2005/063974; subtilisin having SEQ ID NO: 4 as described in WO 2005/103244; subtilisin having SEQ ID NO: 7 as described in WO 2005/103244; and subtilisin having SEQ ID NO: 2 as described in application DE 102005028295.4.

Suitable examples comprise especially variants of subtilisin protease derived from SEQ ID NO:22 as described in EP 1921147 (which is the sequence of mature alkaline protease from *Bacillus lentus* DSM 5483) with amino acid substitutions in one or more of the following positions: 3, 4, 9, 15, 24, 27, 33, 36, 57, 68, 76, 77, 87, 95, 96, 97, 98, 99, 100, 101, 102, 103, 104, 106, 118, 120, 123, 128, 129, 130, 131, 154, 160, 167, 170, 194, 195, 199, 205, 206, 217, 218, 222, 224, 232, 235, 236, 245, 248, 252 and 274 (according to the BPN' numbering), which have proteolytic activity. In one embodiment, such a protease is not mutated at positions Asp32, His64 and Ser221 (according to BPN' numbering).

In one embodiment, at least one protease (D) has a sequence according to SEQ ID NO:22 as described in EP 1921147, or a protease which is at least 80% identical thereto and has proteolytic activity. In one embodiment, said protease is characterized by having amino acid glutamic acid, or aspartic acid, or asparagine, or glutamine, or alanine, or glycine, or serine at position 101 (according to BPN' numbering) and has proteolytic activity. In one embodiment, said protease comprises one or more further substitutions: (a) threonine at position 3 (3T), (b) isoleucine at position 4 (4I), (c) alanine, threonine or arginine at position 63 (63A, 63T, or 63R), (d) aspartic acid or glutamic acid at position 156 (156D or 156E), (e) proline at position 194 (194P), (f) methionine at position 199 (199M), (g) isoleucine at position 205 (205I), (h) aspartic acid, glutamic acid or glycine at position 217 (217D, 217E or 217G), (i) combinations of two or more amino acids according to (a) to (h).

At least one protease (D) may be at least 80% identical to SEQ ID NO:22 as described in EP 1921147 and is characterized by comprising one amino acid (according to (a)-(h)) or combinations according to (i) together with the amino acid 101E, 101D, 101N, 101Q, 101A, 101G, or 101S (according to BPN' numbering). In one embodiment, said protease is characterized by comprising the mutation (according to BPN' numbering) R101 E, or S3T + V4I + V205I, or R101E and S3T, V4I, and V205I, or S3T + V4I + V199M + V205I + L217D, and having proteolytic activity. A protease having a sequence according to SEQ ID NO: 22 as described in EP 1921147 with 101E may be called Lavergy herein.

In one embodiment, protease according to SEQ ID NO:22 as described in EP 1921147 is characterized by comprising the mutation (according to BPN' numbering) S3T + V4I + S9R + A15T + V68A + D99S + R101S + A103S + I104V + N218D, and by having proteolytic activity.

Inventive compositions may comprise a combination of at least two proteases, preferably selected from the group of serine endopeptidases (EC 3.4.21), more preferably selected from the group of subtilisin type proteases (EC 3.4.21.62) - all as disclosed above.

It is preferred to use a combination of lipase (B) and protease (D) in compositions, for example 1 to 2% by weight of protease (D) and 0.1 to 0.5% by weight of lipase (B), both referring to the total weight of the composition.

In the context of the present invention, lipase (B) and/or protease (D) is deemed stable when its enzymatic activity "available in application" equals at least 60% when compared to the initial enzymatic activity before storage. An enzyme may be called stable within this invention if its enzymatic activity available in application is at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99%, or at least 99.5% when compared to the initial enzymatic activity before storage.

Subtracting a% from 100% gives the "loss of enzymatic activity during storage" when compared to the initial enzymatic activity before storage. In one embodiment, an enzyme is stable according to the invention when essentially no loss of enzymatic activity occurs during storage, i.e. loss in enzymatic activity equals 0% when compared to the initial enzymatic activity before storage. Essentially no loss of enzymatic activity within this invention may mean that the loss of enzymatic activity is less than 30%, less than 25%, less than 20%, less than 15%, less than 10%, less than 9%, less than 8%, less than 7%, less than 6%, less than 5%.

In one embodiment of the present invention, inventive compositions comprise

(C) at least one anionic surfactant, hereinafter also being referred to as anionic surfactant (C).

Examples of anionic surfactants (C) are alkali metal and ammonium salts of $C_8$-$C_{18}$-alkyl sulfates, of $C_8$-$C_{18}$-fatty alcohol polyether sulfates, of sulfuric acid half-esters of ethoxylated $C_4$-$C_{12}$-alkylphenols (ethoxylation: 1 to 50 mol of ethylene oxide/mol), $C_{12}$-$C_{18}$ sulfo fatty acid alkyl esters, for example of $C_{12}$-$C_{18}$ sulfo fatty acid methyl esters, furthermore of $C_{12}$-$C_{18}$-alkylsulfonic acids and of $C_{10}$-$C_{18}$-alkylarylsulfonic acids. Preference is given to the alkali metal salts of the aforementioned compounds, particularly preferably the sodium salts.

Further examples of anionic surfactants (C) are soaps, for example the sodium or potassium salts of stearic acid, oleic acid, palmitic acid, ether carboxylates, and alkylether phosphates.

In a preferred embodiment of the present invention, anionic surfactant (C) is selected from compounds according to general formula (III)

$$R^1\text{-}O(CH_2CH_2O)_x\text{-}SO_3M \qquad (III)$$

wherein

- $R^1$ n-$C_{10}$-$C_{18}$-alkyl, especially with an even number of carbon atoms, for example n-decyl, n-dodecyl, n-tetradecyl, n-hexadecyl, or n-octadecyl, preferably $C_{10}$-$C_{14}$-alkyl, and even more preferably n-$C_{12}$-alkyl,
- x being a number in the range of from 1 to 5, preferably 2 to 4 and even more preferably 3.
- M being selected from alkali metals, preferably potassium and even more preferably sodium.

In anionic surfactant (C), x may be an average number and therefore n is not necessarily a whole number, while in individual molecules according to formula (I), x denotes a whole number.

In one embodiment of the present invention, inventive compositions may contain 0.1 to 60 % by weight of anionic surfactant (C), preferably 5 to 50 % by weight.

Inventive compositions may comprise ingredients other than the aforementioned. Examples are non-ionic surfactants, fragrances, dyestuffs, biocides, preservatives, enzymes, hydrotropes, builders, viscosity modifiers, polymers, buffers, defoamers, and anti-corrosion additives.

Preferred inventive compositions may contain one or more non-ionic surfactants.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (III a)

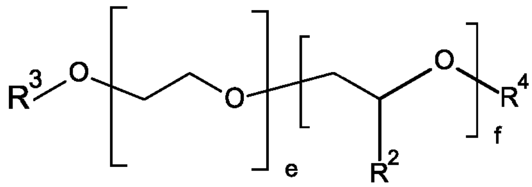

**(III a)**

in which the variables are defined as follows:

- $R^2$ is identical or different and selected from hydrogen and linear $C_1$-$C_{10}$-alkyl, preferably in each case identical and ethyl and particularly preferably hydrogen or methyl,
- $R^3$ is selected from $C_8$-$C_{22}$-alkyl, branched or linear, for example n-$C_8H_{17}$, n-$C_{10}H_{21}$, n-$C_{12}H_{25}$, n-$C_{14}H_{29}$, n-$C_{16}H_{33}$ or n-$C_{18}H_{37}$,
- $R^4$ is selected from $C_1$-$C_{10}$-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

The variables e and f are in the range from zero to 300, where the sum of e and f is at least one, preferably in the range of from 3 to 50. Preferably, e is in the range from 1 to 100 and f is in the range from 0 to 30.

Other preferred examples of alkoxylated alcohols are, for example, compounds of the general formula (III b)

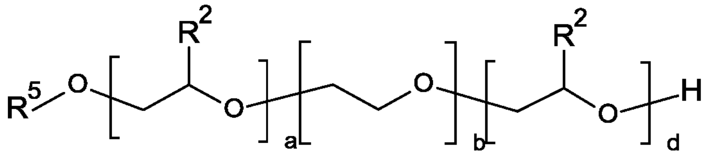

**(III b)**

in which the variables are defined as follows:

- $R^2$ is identical or different and selected from hydrogen and linear $C_1$-$C_0$-alkyl, preferably identical in each case and

ethyl and particularly preferably hydrogen or methyl,

$R^5$ is selected from $C_8$-$C_{20}$-alkyl, branched or linear, in particular n-$C_8H_{17}$, n-$C_{10}H_{21}$, n-$C_{12}H_{25}$, n-$C_{13}H_{27}$, n-$C_{15}H_{31}$, n-$C_{14}H_{29}$, n-$C_{16}H_{33}$, n-$C_{18}H_{37}$,

a is a number in the range from zero to 10, preferably from 1 to 6,

b is a number in the range from 1 to 80, preferably from 4 to 20,

d is a number in the range from zero to 50, preferably 4 to 25.

The sum a + b + d is preferably in the range of from 5 to 100, even more preferably in the range of from 9 to 50.

Compounds of the general formula (III) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear $C_4$-$C_{16}$-alkyl polyglucosides and branched $C_8$-$C_{14}$-alkyl polyglycosides such as compounds of general average formula (IV) are likewise suitable.

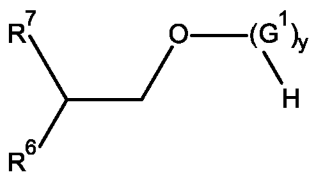

(IV)

wherein:

$R^6$ is $C_1$-$C_4$-alkyl, in particular ethyl, n-propyl or isopropyl,

$R^7$ is -$(CH_2)_2$-$R^6$,

$G^1$ is selected from monosaccharides with 4 to 6 carbon atoms, especially from glucose and xylose,

y in the range of from 1.1 to 4, y being an average number,

Further examples of non-ionic surfactants are compounds of general formula (V) and (VI)

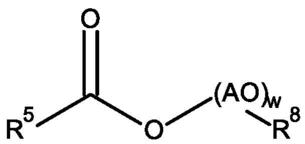

(V)

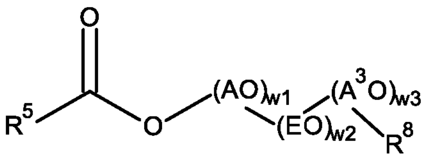

(VI)

AO is selected from ethylene oxide, propylene oxide and butylene oxide,
EO is ethylene oxide, $CH_2CH_2$-O,
$R^8$ selected from $C_8$-$C_{18}$-alkyl, branched or linear, and $R^5$ is defined as above.
$A^3O$ is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (VII)

$$R^9R^{10}R^{11}N{\rightarrow}O \qquad (VII)$$

wherein $R^9$, $R^{10}$, and $R^{11}$ are selected independently from each other from aliphatic, cycloaliphatic or $C_2$-$C_4$-alkylene $C_{10}$-$C_{20}$-alkylamido moieties. Preferably, $R^9$ is selected from $C_8$-$C_{20}$-alkyl or $C_2$-$C_4$-alkylene $C_{10}$-$C_{20}$-alkylamido and $R^{10}$ and $R^{11}$ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

In one embodiment of the present invention, inventive compositions may contain 0.1 to 60 % by weight of at least one surfactant, selected from non-ionic surfactants, amphoteric surfactants and amine oxide surfactants.

In a preferred embodiment, inventive solid detergent compositions for cleaners and especially those for automatic dishwashing do not contain any anionic surfactant.

Inventive compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate.

Examples of organic peroxide bleaches are organic percarboxylic acids, especially organic percarboxylic acids.

In inventive compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive compositions may comprise, for example, in the range from 3 to 10% by weight of chlorine-containing bleach.

Inventive compositions may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive compositions may comprise one or more bleach activators, for example N-methylmor-pholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Examples of fragrances are benzyl salicylate, 2-(4-tert.-butylphenyl) 2-methylpropional, commercially available as Lilial®, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"), 2-butyl-benzo[d]isothiazol-3-one (BBIT), 2-octyl-2H-isothiazol-3-one (OIT);
benzoic acid, sorbic acid and their salts, e.g., sodium benzoate, ammonium benzoate, calcium benzoate, magnesium benzoate, MEA-benzoate, potassium benzoate, calcium sorbate, sodium sorbate, iodopropynyl butylcarbamate

("IPBC"), dichlorodimethylhydantoine ("DCDMH"), bromo-chlorodimethylhydantoine ("BCDMH"), and dibromodimethylhydantoine ("DBDMH").

Particularly of interest are the following antimicrobial agents and/or preservatives: 4,4'-dichloro 2-hydroxydiphenyl ether, further names: 5-chloro-2-(4-chlorophenoxy) phenol, Diclosan, DCPP that is commercially available as a solution of 30 wt% of 4,4'-dichloro 2-hydroxydiphenyl ether in 1,2 propyleneglycol,

2-Phenoxyethanol, further names: Phenoxyethanol, Methylphenylglycol, Phenoxetol, ethylene glycol phenyl ether, Ethylene glycol monophenyl ether);

2-bromo-2-nitropropane-1,3-diol, further names: 2-bromo-2-nitro-1,3-propanediol, Glutaraldehyde (CAS-No. 111-30-8, further names: 1-5-pentandial, pentane-1,5-dial, glutaral, glutardial-dehyde, Glyoxal (further names: ethandial, oxylaldehyde, 1,2-ethandial);

Mixtures of 5-chloro-2-methyl-2H- isothiazol-3-one (CMIT) and 2-methyl-2H-isothiazol-3-one (MIT, EINECS 220-239-6) (mixture of CMIT/MIT); potassium (E,E)-hexa-2,4-dienoate (Potassium Sorbate); lactic acid and its salts; especially sodium lactate, especially L-(+)-lactic acid,

Salicylic acid and its salts, e.g., calcium salicylate, magnesium salicylate, MEA salicylate, sodium salicylate, potassium salicylate, and TEA salicylate.

Benzalkonium chloride, benzalkonium bromide, benzalkonium saccharinate, didecyldimethylam-monium chloride (DDAC); N-(3-aminopropyl)-N-dodecylpropane-1,3-diamine (Diamine); peracetic acid, and hydrogen peroxide.

Biocide or preservative may be added to inventive composition in a concentration of 0.001 to 10% relative to the total weight of the composition.

Preferably, inventive composition contains 2-phenoxyethanol in a concentration of 0.1 to 2% or 4,4'-dichloro 2-hydroxydiphenyl ether (DCPP) in a concentration of 0.005 to 0.6%.

The present invention thus further pertains to a method of preserving an inventive aqueous composition against microbial contamination or growth, which method comprises addition of 2-phenoxyethanol.

The present invention thus further pertains to a method of providing an antimicrobial effect on textiles after treatment with solid laundry detergents, e.g., powders, granulates, capsules, tablets, bars etc.), a liquid laundry detergent, a softener or an after rinse containing 4,4'-dichloro 2-hydroxydiphenyl ether (DCPP).

Examples of viscosity modifiers are agar-agar, carragene, tragacanth, gum arabic, alginates, pectins, hydroxyethyl cellulose, hydroxypropyl cellulose, starch, gelatin, locust bean gum, cross-linked poly(meth)acrylates, for example polyacrylic acid cross-linked with bis-(meth)acrylamide, furthermore silicic acid, clay such as - but not limited to - montmorillonite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of polymers other than polymer (A) are especially polyacrylic acid and its respective alkali metal salts, especially its sodium salt. A suitable polymer is in particular polyacrylic acid, preferably with an average molecular weight $M_w$ in the range from 2,000 to 40,000 g/mol. preferably 2,000 to 10,000 g/mol, in particular 3,000 to 8,000 g/mol, each partially or fully neutralized with alkali, especially with sodium. Suitable as well are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Further examples of polymers are polyvinylpyrrolidones (PVP). Polyvinylpyrrolidones may serve as dye transfer inhibitors.

Further examples of polymers are polyethylene terephthalates, polyoxyethylene terephthalates, and polyethylene terephthalates that are end-capped with one or two hydrophilic groups per molecule, hydrophilic groups being selected from $CH_2CH_2CH_2\text{-}SO_3Na$, $CH_2CH(CH_2\text{-}SO_3Na)_2$, and $CH_2CH(CH_2SO_2Na)CH_2\text{-}SO_3Na$.

Examples of buffers are monoethanolamine ("MEA") and N,N,N-triethanolamine.

Examples of defoamers are silicones.

Inventive compositions are not only good in cleaning soiled laundry with respect to organic fatty soil such as oil. Inventive liquid detergent compositions are very useful for removing non-bleachable stains such as, but not limited to stains from red wine, tea, coffee, vegetables, and various fruit juices like berry juices from laundry. They still do not leave residues on the clothes.

A further aspect of the present invention is therefore the use of inventive compositions for laundry care. Laundry

care in this context includes laundry cleaning.

In another aspect, inventive compositions are useful for hard surface cleaning. A further aspect of the present invention is therefore the use of inventive compositions for hard surface cleaning.

In the context of the present invention, the term "composition for hard surface cleaning" includes cleaners for home care and for industrial or institutional applications. The term "composition for hard surface cleaning" includes compositions for dishwashing, especially hand dishwash and automatic dishwashing and ware-washing, and compositions for hard surface cleaning such as, but not limited to compositions for bathroom cleaning, kitchen cleaning, floor cleaning, descaling of pipes, window cleaning, car cleaning including truck cleaning, furthermore, open plant cleaning, cleaning-in-place, metal cleaning, disinfectant cleaning, farm cleaning, high pressure cleaning, but not laundry detergent compositions. A special embodiment of compositions for hard surface cleaning are automatic dishwashing compositions.

In the context of the present invention, the terms "compositions for hard surface cleaning" and "compositions for hard surface cleaners" are used interchangeably.

In the context of the present invention and unless expressly stated otherwise, percentages in the context of ingredients of laundry detergent compositions are percentages by weight and refer to the total solids content of the respective laundry detergent composition. In the context of the present invention and unless expressly stated otherwise, percentages in the context of ingredients of detergent composition for hard surface cleaners are percentages by weight and refer to the total solids content of the detergent composition for hard surface cleaning.

Inventive compositions when used for automatic dishwashing preferably contain

(E) at least one builder component selected from aminopolycarboxylic acids and preferably their alkali metal salts, in the context of the present invention also referred to as complexing agent (E) or sequestrant (E). In the context of the present invention, the terms sequestrants and chelating agents are used interchangeably.

Examples of sequestrants (E) are alkali metal salts of MGDA (methyl glycine diacetic acid), GLDA (glutamic acid diacetic acid), IDS (iminodisuccinate), EDTA, and polymers with complexing groups like, for example, polyethylenimine in which 20 to 90 mole-% of the N-atoms bear at least one $CH_2COO^-$ group, and their respective alkali metal salts, especially their sodium salts, for example MGDA-$Na_3$, GLDA-$Na_4$, or IDS-$Na_4$.

Preferred sequestrants are those according to general formula (IX a)

$$[CH_3\text{-}CH(COO)\text{-}N(CH_2\text{-}COO)_2]M_{3-x}H_x \qquad \text{(IX a)}$$

wherein M is selected from ammonium and alkali metal cations, same or different, for example cations of sodium, potassium, and combinations of at least two of the foregoing. Ammonium may be substituted with alkyl but non-substituted ammonium $NH_4^+$ is preferred. Preferred examples of alkali metal cations are sodium and potassium and combinations of sodium and potassium, and even more preferred in compound according to general formula (II a) all M are the same and they are all Na;

and x in formula (II a) is in the range of from zero to 1.0,

or (IX b)

$$[OOC\text{-}CH_2CH_2\text{-}CH(COO)\text{-}N(CH_2\text{-}COO)_2]M_{4-x}H_x \qquad \text{(IX b)}$$

wherein M is as defined above, and x in formula (IX b) is in the range of from zero to 2.0, preferably to 1.0,

or (IX c)

$$[OOC\text{-}CH_2\text{-}CH(COO)]\text{-}N\text{-}CH(COO)\text{-}CH_2\text{-}COO]M_{4-x}H_x \qquad \text{(IX c)}$$

wherein M is as defined above, and x in formula (II c) is in the range of from zero to 2.0, preferably to 1.0.

In one embodiment of the present invention, said inventive composition contains a combination of at least two of the foregoing, for example a combination of chelating agent according to general formula (IX a) and a chelating agent according to general formula (IX b).

Chelating agents according to the general formulae (IX a) and (IX b) are preferred. Even more preferred are chelating agents according to the general formula (IX a).

In one embodiment of the present invention, compound according to general formula (IX a) is selected from

ammonium or alkali metal salt of racemic MGDA and from ammonium and alkali metal salts of mixtures of L- and D-enantiomers according to formula (IX a), said mixture containing predominantly the respective L-isomer with an enantiomeric excess (ee) in the range of from 5 to 99%, preferably 5 to 95%, more preferably from 10 to 75% and even more preferably from 10 to 66%.

In one embodiment of the present invention, compound according to general formula (IX b) is selected from at least one alkali metal salt of a mixture of L- and D- enantiomers according to formula (IX b), said mixture containing the racemic mixture or preferably predominantly the respective L-isomer, for example with an enantiomeric excess (ee) in the range of from 5 to 99%, preferably 15 to 95%.

The enantiomeric excess of compound according to general formula (IX a) may be determined by measuring the polarization (polarimetry) or preferably by chromatography, for example by HPLC with a chiral column, for example with one or more cyclodextrins as immobilized phase or with a ligand exchange (Pirkle-brush) concept chiral stationary phase. Preferred is determination of the ee by HPLC with an immobilized optically active amine such as D-penicillamine in the presence of copper(+II) salt. The enantiomeric excess of compound according to general formula (IX b) salts may be determined by measuring the polarization (polarimetry).

Due to the environmental concerns raised in the context with the use of phosphates, it is preferred that advantageous compositions are free from phosphate. "Free from phosphate" should be understood in the context of the present invention as meaning that the content of phosphate and polyphosphate is in sum in the range of from detection level to 1% by weight, preferably from 10 ppm to 0.2% by weight, determined by gravimetry.

In one embodiment of the present invention, inventive compositions contain in the range of from 0.5 to 50% by weight of sequestrant (E), preferably 1 to 35% by weight, referring to the total solids content.

In order to be suitable as liquid laundry compositions, inventive compositions may be in bulk form or as unit doses, for example in the form of sachets or pouches. Suitable materials for pouches are water-soluble polymers such as polyvinyl alcohol.

In a preferred embodiment of the present invention, inventive compositions are liquid or gel-type at ambient temperature. In another preferred embodiment of the present invention, inventive compositions are solid at ambient temperature, for example powders or tabs.

In one embodiment of the present invention, inventive compositions are liquid or gel-type and have a pH value in the range of from 7 to 9, preferably 7.5 to 8.5. In embodiments where inventive compositions are solid, their pH value may be in the range of from 7.5 to 11, determined after dissolving 1 g/100 ml in distilled water and at ambient temperature. In embodiments where inventive compositions are used for hard surfaces like tiles, for example bathroom tiles, their pH value may even be acidic, for example from 3 to 6.

In one embodiment of the present invention, inventive compositions are liquid or gel-type and have a total solids content in the range of from 8 to 80%, preferably 10 to 50%, determined by drying under vacuum at 80°C.

Another aspect of the present invention is related to polymers (A), hereinafter also referred to as inventive polymers (A) or simply as polymers (A). Inventive polymers (A) comprise

Polymer (A) comprises

(c) core that bears one to 50, preferably 3 to 25 moieties of the general formula (I),

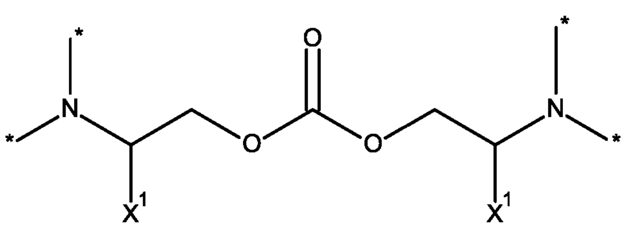

(I)

and groups of the general formula

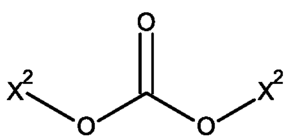

(II)

wherein the asterisk stands for another group according to general formula (I), linked though $X^2$, or for $C_1$-$C_4$-alkyl, for example methyl, ethyl, isopropyl, n-propyl, n-butyl, iso-butyl or sec.-butyl, methyl being preferred $C_1$-$C_4$-alkyl,

or the asterisk stands for a group according to formula (II), or for a polyalkylene oxide chain (b),

wherein are different or preferably same and selected from hydrogen and $C_1$-$C_2$-alkyl, preferably the majority of all are hydrogen, and even more preferably all are hydrogen,

wherein $X^2$ are same of different and selected from $C_2$-$C_6$-alkylene, straight-chain or branched, non-substituted or substituted with one or more hydroxyl groups, preferably tertiary hydroxyl groups, with ester groups of carboxylic acids, for example $COOCH_3$, $COOC_2H_5$, or ether groups, for example $-OCH_3$ or $-OC_2H_5$. Examples of straight-chain $C_2$-$C_6$-alkylene are $-(CH_2)_2-$, $-(CH_2)_3-$, $-(CH_2)_4-$, $-(CH_2)_5-$ and $-(CH_2)_6-$, examples of substituted are residues based on citric acid, $-CH_2-C(OH)(COO-)-CH_2-$.

(b) polyalkylene oxide chains.

Said polyalkylene oxide side chains may be derived from $C_2$-$C_4$-alkylene oxide. Examples of $C_2$-$C_4$-alkylene oxides are ethylene oxide ("EO"), propylene oxide ("PO"), butylene oxide ("BuO"), and mixtures of at least two of the foregoing, for example ethylene oxide and propylene oxide or ethylene oxide and butylene oxide. Preferred are propylene oxide and ethylene oxide, more preferred is ethylene oxide.

In a preferred embodiment, the numerical majority of alkylene oxide in polyalkylene oxide chains (b) is EO and the rest PO or BU. In a more preferred embodiment, all the alkylene oxide in polyalkylene oxide chains (b) is EO.

In one embodiment of the present invention, the weight ratio of core (a) to polyalkylene oxide chains (b) in inventive polymer (A) is in the range of from 1 to 100 up to 1 to 2, preferred are 1 to 40 up to 1 to 3.

In one embodiment of the present invention, inventive polymer (A) additionally comprises groups according to the formula $(CH_2)_{z1}$-$[N(CH_2)_{z2}]_{z4}$-$N(CH_2)_{z3}$-, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups, and wherein the free valences of the N-atoms bear chains (b). Said additional groups then constitute a part of the core (a).

Preferably, the variables are selected as follows: z1 and z3 are both 3, z2 is 2 and z4 is 1, or: z1 is 2, z4 is zero and z3 is 3, and z2 is from 2 to 4.

In one embodiment of the present invention, the numerical ratio of groups according to formula (I) and groups according to formula $(CH_2)_{z1}N(CH_2)_{z2}]_{z4}$-$N(CH_2)_{z3}$- is in the range of from 2:1 to 6:1.

Polyalkylene oxide chains (b) may bear a hydrogen atom at the end (so-called non-capped), or they may be capped with $C_1$-$C_{10}$-alkyl, especially with methyl, or with $-SO_3Na$.

In one embodiment of the present invention, the average molecular weight $M_w$ of inventive polymer (A) is at least 1,500 g/mol, preferably in the range of from 2,500 to 80,000 g/mol. The average molecular weight may be determined by gel permeation chromatography ("GPC"), in 0.1 M aqueous NaCl solution containing 0.05 % by weight trifluoroacetic acid potassium salt as mobile phase, or in HFIP containing 0.05 % by weight trifluoroacetic acid potassium salt as mobile phase, each time preferably with TSKgel as stationary phase.

In a preferred embodiment of the present invention, inventive polymer (A) is water-soluble. This means that at ambient temperature, at least 50 of polymer (A) may be dissolved in one litre distilled water without emulsion formation.

In one embodiment of the present invention, the polydispersity $Q = M_w/M_n$ of inventive polymer (A) is in the range of from 2 to 10, preferably 2.5 to 6.

Further details of inventive polymers (A) have been described above. Inventive polymers (A) do not only show excellent cleaning properties but also a better shelf-life. Their degradation under storage conditions is improved without significant hampering the biodegradation in waste water.

A further aspect of the present invention relates to a process for making inventive polymers (A), hereinafter also referred to as inventive process. The inventive process comprises the steps of

($\alpha$) providing a mixture comprising at least one alkoxylated, preferably ethoxylated amine, diamine, oligo-amine or polyamine, and at least one aliphatic $C_2$-$C_6$-diol or $C_3$-$C_6$-triol that does not bear an N atom,
($\beta$) reacting the mixture from step ($\alpha$) with dialkyl carbonate,
($\gamma$) reacting the carbonate from step ($\beta$) with at least one $C_2$-$C_4$-alkylene oxide in one or more steps, or, in the alternative,
($\gamma$') reacting the carbonate from step ($\beta$) with a polyalkylene oxide that is capped with a $C_1$-$C_{10}$-alkyl group or esterified with an aliphatic $C_2$-$C_{20}$-alkyl fatty acid or with a $C_{10}$-$C_{20}$-alkenyl fatty acid.

The inventive process will be explained in more detail below. The steps ($\alpha$), ($\beta$) and ($\gamma$) or ($\gamma$') will also be referred as step ($\alpha$), step ($\beta$), step ($\gamma$), or step ($\gamma$'), respectively, or simply as ($\alpha$), ($\beta$), and ($\gamma$) and ($\gamma$').

Examples of alkoxylated, preferably ethoxylated amines are monoethanolamine, N,N-diethanolamine, N-methylethanolamine, N-methyldiethanolamine, N,N-dimethyl-ethanolamine, N,N,N-triethanolamine, and 2-propanol-1-amine.

Examples of alkoxylated, preferably ethoxylated diamines are bisalkoxylated ethylendiamine, especially bisethoxylated ethylendiamine, bisalkoxylated 1,3-propylendiamine, especially bisethoxylated 1,3-propylendiamine, and bisalkoxylated $\alpha,\omega$-$C_4$-$C_6$-alkylendiamines, especially bisethoxylated $\alpha,\omega$-$C_4$-$C_6$-alkylendiamines, tetraalkoxylated ethylendiamine, especially tetraethox-ylated ethylendiamine.

Further examples of alkoxylated, preferably ethoxylated, diamines are cyclic compounds, especially the bisethoxylate of 2,4-diamino-1-methyl cyclohexane and 2,6-diamino-1-methyl cyclohexane and mixtures thereof.

Examples of alkoxylated, preferably ethoxylated, oligo-amines are alkoxylated and especially ethoxylated amines of $H_2N$-$(CH_2)_{z1}$-$[NH(CH_2)_{z2}]_{z4}$-$NH(CH_2)_{z3}$-$NH_2$, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups. Preferred oligoamines are $H_2N$-$(CH_2)_3$-$NH(CH_2)_2$-$NH(CH_2)_3$-$NH_2$ ("N4-amine") and $H_2N$-$(CH_2)_3$-$NH(CH_2)_2$-NH2 ("N3-amine") and mixtures thereof, for example in a molar ratio of 9:1.

Examples of ethoxylated N4-amine are usually mixtures of compounds. Specific examples are

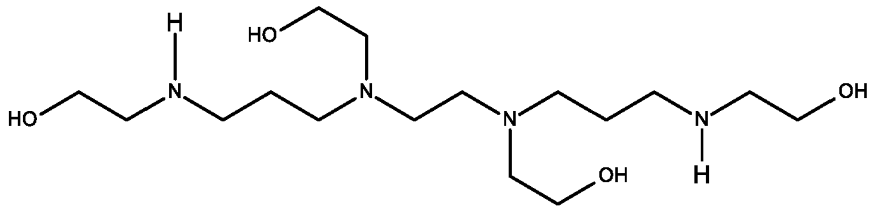

and - depending on the ratio of EO to N, one or more of the following:

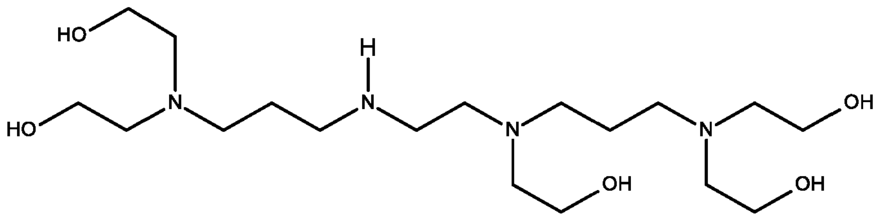

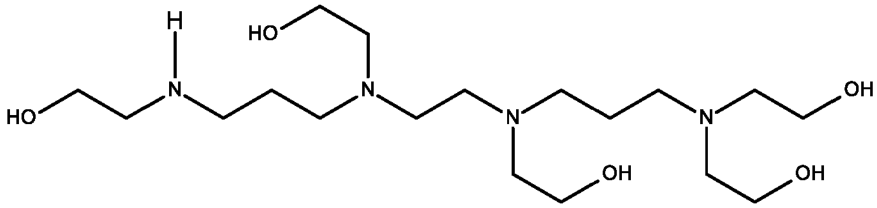

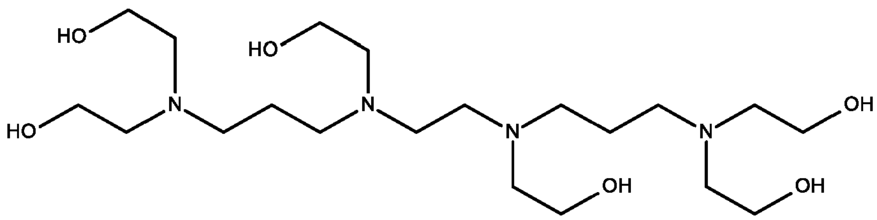

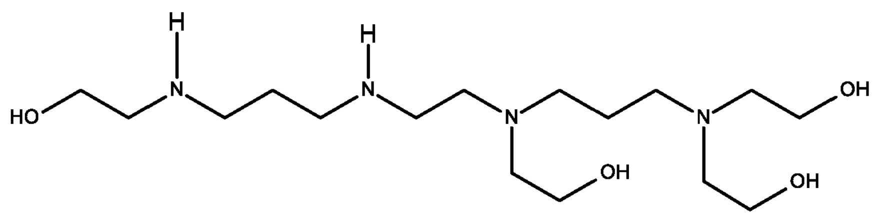

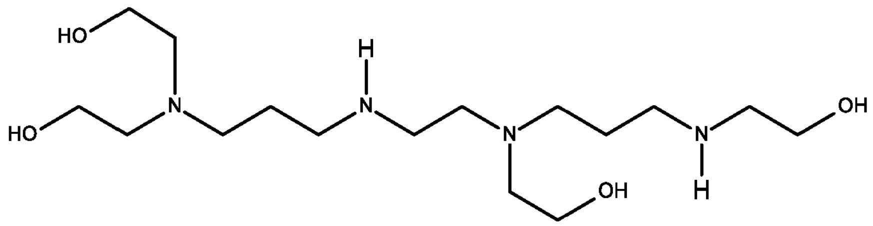

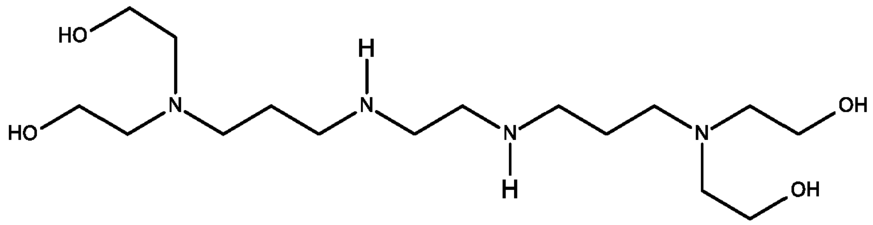

and the respective monoethoxylates.

Specific examples of ethoxylated oligoamines are bis-ethoxylated N4-amine and bis-ethoxylated N3-amine.

Examples of alkoxylated, preferably ethoxylated polyamine are poly-alkoxylated - preferably ethoxylated - polyethylenimines, and poly-alkoxylated - preferably ethoxylated - polypropylene imines, and alkoxylated - preferably ethoxylated - polyvinylamines. A base polyethylenimine or polypropylenimine may be linear or preferably branched, and a base polyethylenimine or polypropylenimine or polyvinylamine may have an average molecular weight $M_w$ in the range of from 500 to 2,500 g/mol.

Said alkoxylation - preferably ethoxylation - preferably refers to 0.3 to 2 moles alkoxide, preferably ethylene oxide, per NH function of the underlying ("base") amine.

The mixture provided in step ($\alpha$) further contains at least one aliphatic $C_2$-$C_6$-diol or $C_3$-$C_6$-triol that does not bear an N atom. Examples are ethylene glycol, 1,2-propylene glycol, 1,4-propylene glycol, 2,3 butanediol, 1,5-pentane diol, 2,2-dimethylpropane-1,3-diol, 1,6-hexane diol, glycerol, and 1,3,5-pentanediol.

Mixtures provided in step ($\alpha$) may be composed of 33 to 100 mol%, preferably 70 to 80 mol% of alkoxylated, preferably ethoxylated amine, diamine, oligo-amine or polyamine, and 0 to 67 mol%, preferably 15-30 mol% of at least one aliphatic $C_2$-$C_6$-diol or $C_3$-$C_6$-triol that does not bear an N atom.

Said mixture may be provided by mixing the constituents or - in case two alkoxylated amines are provided - jointly alkoxylating two or more amines, in the absence or presence of diol or triol.

In one embodiment of the present invention, the mixture provided in step ($\alpha$) comprises an alkoxylated amine based on a compound of the formula $H_2N$-$(CH_2)_{z1}$-$[NH(CH_2)_{z2}]_{z4}$-$NH(CH_2)_{z3}$-$NH_2$, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups.

Preferred amines are N4-amine and N3-amine and mixtures thereof.

Said mixture may be provided in bulk or with a solvent. Examples of suitable solvents are hydrocarbons, e.g., aromatic or aliphatic or cycloaliphatic hydrocarbons. Specific examples are cyclohexane, toluene, benzene, n-heptane and the like. Preferably, said mixture is provided in bulk.

In step ($\beta$), the mixture from step ($\alpha$) is reacted with a dialkyl carbonate, for example dimethyl carbonate, diethyl carbonate, methylethyl carbonate, diisopropyl carbonate, preferably with di-$C_1$-$C_2$-alkyl carbonate, for example dimethyl carbonate or diethyl carbonate.

In one embodiment of the present invention, step ($\beta$) is performed at a temperature in the range of from 80 to 180°C, preferably 100 to 175°C. It is preferred to ramp up the temperature in the course of step ($\beta$).

In the course of step ($\beta$) alcohol is formed. For example, when diethyl carbonate is used, ethanol is formed. It is preferred to remove the alcohol, for example by distilling it off.

In one embodiment of the present invention, step ($\beta$) is performed at ambient pressure. It is preferred, though, to perform step ($\beta$) at reduced pressure, for example from 10 to 500 mbar to facilitate the alcohol removal.

In one embodiment of the present invention, step ($\beta$) has a duration in the range of from one hour to two days.

In a preferred embodiment of the present invention, step ($\beta$) is performed in the presence of a catalyst. Inorganic bases such as KOH and $K_2CO_3$ and organic bases may serve as catalysts. Preferred catalysts are tertiary amines, especially bicyclic amines. Examples are triethyl amine, and 1,5,7-triazabicyclo[4,4,0]dec-5-ene, and 1,5-diazabicyclo [4.3.0]non-5-en, 1,8-Diazabicy-clo[5.4.0]undec-7-ene.

Said catalyst - or a mixture of catalysts - may be applied in amounts of 0.1 to 10% by weight, referring to the mixture provided in step ($\alpha$).

After step (β), an intermediate is formed that is termed core (a) in the context of the present invention.

In step (γ), core (a) is reacted with at least one $C_2$-$C_4$-alkylene oxide. Examples of $C_2$-$C_4$-alkylene oxides are ethylene oxide („EO"), propylene oxide ("PO"), butylene oxide ("BuO"), and mixtures of at least two of the foregoing. Preferred are propylene oxide and ethylene oxide, more preferred is ethylene oxide.

In one embodiment of the present invention, the weight ratio of core (a) and alkylene oxide in step (γ) corresponds to the ratio of core (a) to side chains (b), thus, 1 to 100 up to 1 to 2, preferred are 1 to 40 up to 1 to 3.

Step (γ) is preferably carried out in the presence of a catalyst, for example a base or a double-metal cyanide.

In one embodiment of the present invention, step (γ) is carried out in the presence of a base. Suitable bases such as potassium hydroxide, sodium hydroxide, sodium or potassium alkoxides such as potassium methylate ($KOCH_3$), potassium tert-butoxide, sodium ethoxide and sodium methylate ($NaOCH_3$), preferably from potassium hydroxide and sodium hydroxide. Further examples of catalysts are alkali metal hydrides and alkaline earth metal hydrides such as sodium hydride and calcium hydride, and alkali metal carbonates such as sodium carbonate and potassium carbonate. Preference is given to the alkali metal hydroxides, preference being given to potassium hydroxide and sodium hydroxide, and to alkali metal alkoxides, particular preference being given to potassium t-butoxide in t-butanol, sodium n-hexanolate in n-hexanol, and to sodium methanolate in n-nonanol. Typical use amounts for the base are from 0.05 to 10% by weight, in particular from 0.5 to 2% by weight, based on the total amount of condensate from step (β) and $C_2$-$C_4$-alkylene oxide.

In one embodiment of the present invention, step (γ) is carried out in the presence of a double-metal cyanide. Double-metal cyanides, hereinafter also referred to as double metal cyanide compounds or DMC compounds, usually comprise at least two different metals, at least one of them being selected from transition metals and the other one being selected from transition metals and alkali earth metals, and furthermore cyanide counterions. Particularly suitable catalysts for the alkoxylation are double-metal cyanide compounds which contain zinc, cobalt or iron or two thereof. Berlin blue, for example, is particularly suitable.

Preference is given to using crystalline DMC compounds. In a preferred embodiment, a crystalline DMC compound of the Zn-Co type which comprises zinc acetate as further metal salt component is used as catalyst. Such compounds crystallize in monoclinic structure and have a platelet-like habit.

In one embodiment of the present invention, the inventive synthesis is carried out in the presence of at least one double-metal cyanide selected from hexacyano cobaltates.

Double-metal cyanide compounds can be used as powder, paste or suspension or be moulded to give a moulding, be introduced into mouldings, foams or the like or be applied to mouldings, foams or the like.

Preferably, DMC catalyst used for step (γ), based on core (a) obtained in step (β), is from 5 to 2000 ppm (i.e. mg of catalyst per kg of product), preferably less than 1000 ppm, in particular less than 500 ppm, particularly preferably less than 100 ppm, for example less than 50 ppm or 35 ppm, particularly preferably less than 25 ppm; ppm referring to mass-ppm (parts per million) of polycondensate obtained in step (β).

Step (γ) may be carried out in bulk, embodiment (i), or in an organic solvent, embodiment (ii). In embodiment (i), water can be removed from the polycondensate obtained in step (β). Such water removal can be done by heating to a temperature in the range of from 80 to 150°C under a reduced pressure in the range of from 0.01 to 0.5 bar and distilling off the water.

In one embodiment of the present invention, step (γ) is carried out at a reaction temperature in the range of from 70 to 200°C and preferably from 100 to 180°C.

In one embodiment of the present invention, step (γ) is carried out once per synthesis of inventive polymer (A). In an alternative embodiment, step (γ) is carried out several time, for example up to four times per synthesis of an inventive polymer (A), for example with the same or preferably with different $C_2$-$C_4$-alkylene oxides. It is, for example, possible to subject a polycondensate obtained in step (β) to a first alkoxylation (γ1) with ethylene oxide and to subject the product from step (γ1) to a second alkoxylation (γ2), for example with propylene oxide.

In one embodiment of the present invention, step (γ) is carried out at a pressure of up to 10 bar and in particular up to 8 bar, for example 1 to 8 bar.

In one embodiment of the present invention, the reaction time of step (γ) is generally in the range of from 0.5 to 12 hours.

Examples of suitable organic solvents for embodiment (ii) of step (γ) are nonpolar and polar aprotic organic solvents. Examples of particularly suitable nonpolar aprotic solvents include aliphatic and aromatic hydrocarbons such as hexane, cyclohexane, toluene and xylene. Examples of particularly suitable polar aprotic solvents are ethers, in particular cyclic ethers such as tetrahydrofuran and 1,4-dioxane, furthermore N,N-dialkylamides such as dimethylformamide and dimethylacetamide, and N-alkyllactams such as N-methylpyrrolidone. It is as well possible to use mixtures of at least two of the above organic solvents. Preferred organic solvents are xylene and toluene.

In embodiment (ii), the solution obtained in the first step, before or after addition of catalyst and solvent, is dewatered before being subjected to alkylene oxide, said water removal advantageously being done by removing the water at a temperature in the range of from 120 to 180°C, preferably supported by a stream of nitrogen. The subsequent reaction with the alkylene oxide may be effected as in embodiment (i). In embodiment (i), alkoxylated polyalkylenimines

according to the invention is obtained directly in bulk and may be dissolved in water, if desired. In embodiment (ii), for work-up organic solvent is typically replaced by water. Alkoxylated polyalkylenimines (B) according to the invention may alternatively be isolated in bulk.

An - optional - step of work-up may include the deactivation of catalyst used in step ($\gamma$), in the case of basic catalysts by neutralization.

In the alternative, a step ($\gamma$') may be performed. Step ($\gamma$') includes reacting core (a) with a polyalkylene glycol carboxylic acid that may be capped with $C_1$-$C_{10}$-alkyl, especially with methyl, or be non-capped. Preferably, at least 50 mol-% of the alkylene groups of said polyalkylene glycol carboxylic acid are ethylene oxide.

The respective carboxylic acids and especially carboxylic acids of polyalkylene oxide of which at least 50 mole-% of the alkylene oxide units are ethylene oxide may be made by oxidation of one hydroxyl group of the respective polyalkylene glycols with Pt on charcoal as catalyst.

The respective mono- $C_1$-$C_{10}$-alkyl capped carboxylic acids may be synthesized by oxidation of the respective monomethyl-capped polyalkylene glycol, for example with Pt on charcoal as catalyst.

In one embodiment of the present invention, step ($\gamma$') is performed in the presence of a catalyst.

Step ($\gamma$') may be carried out at temperatures in the range of from 20 to 180°C. In embodiments wherein ester(s), in particular $C_1$-$C_2$-alkyl esters are used, such as adipic acid diethyl ester, diethyl succinate, adipic acid dimethyl ester, dimethyl succinate, sebacic acid dimethyl ester, sebacic acid diethyl ester, diethyl, triethyl citrate or the like, temperatures in the range of from 25 to 150°C are preferred. In embodiments wherein anhydride(s) are applied, for example succinic anhydride, 25 to 150°C are preferred. In embodiments wherein the respective free acid(s) are used, temperatures in the range of from 100 to 180°C are preferred. Especially in embodiments wherein temperatures of 100°C or more are applied it is preferred to ramp up the temperature.

Step ($\gamma$') may be performed at any pressure, for example from 10 mbar to 10 bar. Preferred are ambient pressure and pressures below, for example 10 to 500 mbar.

In the course of step ($\gamma$'), water is formed. It is preferred to remove such water, for example by distilling them off. Suitable tools are Dean-Stark apparatuses, distillation bridges, water elimina-tors, and other apparatuses that may serve for removal of water by distillation.

Step ($\gamma$') may be performed in the absence or presence of a solvent. Suitable solvents are aromatic solvents like toluene, aliphatic hydrocarbons or cycloaliphatic solvents, for example decane, cyclohexane, n-heptane and the like. It is preferred, though, to perform step ($\beta$) in the absence of a solvent, especially when the reaction mixture is liquid at the reaction temperature.

Examples of suitable catalysts are especially acidic catalysts, for example inorganic acids and organic acids.

Acidic inorganic catalysts for the purposes of the present invention include for example sulfuric acid, phosphoric acid, phosphonic acid, hypophosphorous acid $H_3PO_2$, aluminum sulfate hydrate, alum, acidic silica gel (pH value 5 to 6) and acidic alumina. Suitable are as well, for example, aluminum compounds of the general formula $Al(OR^b)_3$ and titanates of the general formula $Ti(OR^b)_4$ as acidic inorganic catalysts, the residues $R^b$ each being identical or different and being chosen independently of one another from

$C_1$-$C_{10}$-alkyl, such as methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, isoheptyl, n-octyl, 2-ethylhexyl, n-nonyl or n-decyl,

$C_3$-$C_{12}$-cycloalkyl, examples being cyclopropyl, cyclobutyl, cyclopentyl, cyclohexyl, cycloheptyl, cyclooctyl, cyclononyl, cyclodecyl, cycloundecyl and cyclododecyl; preference is given to cyclopentyl, cyclohexyl and cycloheptyl.

Preferably the residues $R^5$ in $Al(OR^5)_3$ and $Ti(OR^5)_4$ are each identical and chosen from isopropyl or 2-ethylhexyl.

Preferred acidic organometallic catalysts are chosen for example from dialkyltin oxides $(R^b)_2SnO$ with $R^b$ being as defined above. One particularly preferred representative of acidic organometallic catalysts is di-n-butyltin oxide, available commercially in the form of oxo-tin.

Preferred acidic organic catalysts are acidic organic compounds containing, for example, phosphate groups, sulfonic acid groups, sulfate groups or phosphonic acid groups. Particular preference is given to sulfonic acids such as para-toluenesulfonic acid, or methanesulfonic acid for example. Acidic ion exchangers can also be used as acidic organic catalysts, examples being polystyrene resins which contain sulfonic acid groups and have been crosslinked with about 2 mol % of divinylbenzene. Particularly preferred is methanesulfonic acid.

Combinations of two or more of the aforementioned catalysts can also be used. Another possibility is to use those organic or organometallic or else inorganic catalysts which are in the form of discrete molecules, in an immobilized form.

If the use of acidic inorganic, organometallic or organic catalysts is desired, the amount of catalyst used in accordance with the invention is from 0.01 to 10% by weight, preferably from 0.1 to 2% by weight, more preferably 0.2 to 1%

by weight, each based on the total amount of the reactants.

In another embodiment of the present invention, step (γ') is performed without a catalyst.

In one embodiment of the present invention, step (γ') has a duration in the range of from 30 minutes up to 15 hours.

A further aspect of the present invention is directed towards a method of improving the cleaning performance of a liquid detergent composition by adding an inventive polymer (A) to a detergent composition that comprises at least one lipase and/or at least one protease.

The term "improved cleaning performance" herein may indicate that polymers (A) provide better, i.e., improved, properties in stain removal under relevant cleaning conditions, when compared to the cleaning performance of a detergent composition lacking polymer (A). In one embodiment, "improved cleaning performance" means that the cleaning performance of a detergent comprising polymer (A) and at least one enzyme, preferably at least one hydrolase (B), especially at least one lipase (B) and/or at least one protease (D), is improved when compared to the cleaning performance of a detergent comprising polymer (A) and no enzyme. In one embodiment, "improved cleaning performance" means that the cleaning performance of a detergent comprising polymer (A) and an enzyme, preferably hydrolase (B), more preferably lipase (B) and/or protease (D), is improved when compared to the cleaning performance of a detergent comprising at least one enzyme, preferably at least one hydrolase (B), preferably lipase (B) and/or at least one protease (D) and no polymer (A).

The term "relevant cleaning conditions" herein refers to the conditions, particularly cleaning temperature, time, cleaning mechanics, suds concentration, type of detergent and water hardness, actually used in laundry machines, automatic dish washers or in manual cleaning processes.

Inventive polymers (A) are excellently suited as or for the manufacture of inventive compositions. Inventive polymers (A) show significant biodegradability.

Working Examples

general remarks: percentages are weight percent unless specifically noted otherwise. rpm: revolutions per minute.

Molecular weights were determined by GPC in HFIP with 0.05 % by weight of potassium trifluoroacetate (trifluoro acetic acid potassium salt) as mobile phase and TSKgel as stationary phase

I. Syntheses of inventive polymers (A)

I.1 Synthesis of inventive polymers (A.1.1) and (A.1.2)

Synthesis of core (a.1):

Step (α.1): A three-neck round bottom flask with a mechanical stirrer, dropping funnel, and a condenser attached to a vacuum line was charged with 1,5-pentanediol (11.49 g, 0.11 mol, 1.0 eq.), N,N,N-triethanolamine (37.04 g, 0.248 mol, 2.25 eq.), and N4-amine ethoxylated with 1.0 ethylene oxide/NH (37.18 g, 0.085 mol, eq.). The mixture was heated to 100 °C and a reduced pressure of 500 mbar was applied for 5 hours to remove moisture from the reaction.

Step (β.1): Subsequently, vacuum was stopped and 1,5,7-triazabicyclo[4,4,0]dec-5-ene (0.30 g, $2.15 \cdot 10^{-3}$ mol, 0.02 eq.) was added to the mixture, the apparatus was submitted to a nitrogen stream for 1h, followed by the addition of diethyl carbonate (62.95 g, 0.533 mol) over a period of 1 hour through the dropping funnel. The dropping funnel was removed, and the reaction mixture was stirred at 140 °C over 16 hours. A distillation bridge was installed, and the formed ethanol and excess diethyl carbonate was removed. Subsequently, a reduced pressure of maximum 50 mbar was applied, and the reaction was conducted for another 12 hours. A black, highly viscous crude product was obtained, which was purified by precipitation into cold ethyl acetate to afford a dark brown polymer, core (a.1).

$M_n$: 1500 g/mol, $M_w$: 4550 g/mol, $M_w/M_n$: 3.0; OH value: 831.4 mg KOH/g

Step (γ.1):_34.4 g of core (a.1) were mixed with 2.0 g KOH 50%ig (0.2% of A.1.1). Then the water was removed at 100°C under vacuum. The residue was transferred into a 2 liter-reactor inertized with $N_2$ and pressurized with 2 bar (abs) and dissolved in 55.6 g methylethylketone . The reactor was heated up to 130°C and 50 grams of ethylene oxide were introduced during 10 minutes with 100 rpm stirring speed.

Additional 398 g ethylene oxide were added within 8 hours (0.6 g/min) also at 130°C with a stirring speed of 200 rpm. Then, the resultant mixture was heated for additional 6 hours at 130° and the reaction is finished. 483 grams of polymer (A.1.1) were obtained after rotary evaporation. 99.8% yield.

$M_w$ =2470 g /mol, $M_n$ = 1610 g/mol, $M_w/M_n$ = 1.5; OH value: 82 mg KOH/g; amine value: 25 mg KOH/g; $H_2O$: 0.3 %

Step (γ.2):_218 g of inventive polymer (A.1.1) were mixed with 1.7 g KOH 50%ig (0.2% of (A.1.1)). Then, the water was removed at 100°C under vacuum. The residue was transferred in a 3.5 liter-reactor inertized with $N_2$ and pressurized with 2 bar (abs). The reactor was then heated up to 130°C and 10 grams of propylene oxide were introduced during 10 minutes

with 100 rpm stirring speed.

Additional 208 grams propylene oxide were within 3 hours (1 g/min) at 130°C and a stirring speed of 200 rpm. After that the mixture was heated for additional 6 hours at 130°. After cooling to ambient temperature, 421 g inventive polymer (A.1.2) were obtained after rotary evaporation. 97.2 % yield.

$M_w$ = 3130 g/mol, $M_n$ = 1950 g/mol and $M_w/M_n$ = 1.6; OH value: 65 mg KOH/g; amine value: 14 mg KOH/g; $H_2O$: 0.3 %.

I.2 Synthesis of inventive polymer (A.2)

Synthesis of core (a.2):

Step (α.2): A three-neck round bottom flask with a mechanical stirrer, dropping funnel, and a condenser attached to a vacuum line was charged with 1,5-pentanediol (52.56 g, 0.5 mol, 2.0 eq.), triethanolamine (37.3 g, 0.25 mol, 1.0 eq.). The mixture was heated to 100 °C and a vacuum of 500 mbar was applied for 5 hours to remove moisture from the reaction.

Step (β.2): Subsequently, vacuum was stopped and 1,5,7-triazabicyclo[4,4,0]dec-5-ene (0.19 g, $1.36 \cdot 10^{-3}$ mol, $5.4 \cdot 10^{-3}$ eq.) was added to the mixture, the apparatus was submitted to a nitrogen stream for 1h, followed by the addition of diethyl carbonate (118.13 g, 1.0 mol, 4.0 eq.) over a period of 1 hour through the dropping funnel. The dropping funnel was removed, and the reaction mixture was stirred at 140 °C over about 14 hours.

Step (γ'.1): The reaction mixture from step (β.2) was cooled to ambient temperature. Polyethylene glycol methyl ether, $M_n$ 750 g (18g, 7.0 g, 0.25 mol, 1.0 eq.) was added. The reaction mixture was heated to 165 °C for 2h under reflux, followed by a vacuum distillation at a pressure of maximum 75 mbar for 12 h. A light brown to brown polymer was obtained, inventive polymer (A.2). $M_n$: 17600 g/mol, $M_w$: 37400 g/mol, $M_w/M_n$: 2.1

I.3 Synthesis of inventive polymer (A.3)

Synthesis of core (a.3):

Step (α.3): A three-neck round bottom flask with a mechanical stirrer, dropping funnel, and a condenser attached to a vacuum line was charged with 1,5-pentanediol (42.05 g, 0.4 mol, 1.15 eq.), triethanolamine (52.5 g, 0.35 mol, 1.0 eq.). The mixture was heated to 100 °C and a vacuum of 500 mbar was applied for 5 hours to remove moisture from the reaction.

Step (β.3): Subsequently, vacuum was stopped and 1,5,7-triazabicyclo[4,4,0]dec-5-ene (0.19 g, $1.36 \cdot 10^{-3}$ mol, $5.4 \cdot 10^{-3}$ eq.) was added to the mixture, the apparatus was submitted to a nitrogen stream for 1h, followed by the addition of diethyl carbonate (147,66 g, 1.25 mol, 5.0 eq.) over a period of 1 hour through the dropping funnel. The dropping funnel was removed, and the reaction mixture was stirred at 140 °C over about 14 hours.

Step (γ'.2): The reaction mixture from step (β.3) was cooled to ambient temperature. Polyethylene glycol methyl ether, $M_n$ 750 g (187.0 g, 0.25 mol, 0.71 eq.) was added. The reaction mixture was heated to 165 °C for 2h under reflux, followed by a vacuum distillation at a pressure of maximum 75 mbar for 12 h. A light brown to brown polymer was afforded, inventive polymer (A.3). $M_n$: 15900 g/mol, $M_w$: 42800 g/mol, $M_w/M_n$: 2.7

I.4 Synthesis of inventive polymer (A.4)

Synthesis of core (a.4):

Step (α.4): A three-neck round bottom flask with a mechanical stirrer, dropping funnel, and a condenser attached to a vacuum line was charged with 1,5-pentanediol (31.54 g, 0.3 mol, 0.67 eq.), triethanolamine (67.5 g, 0.45 mol, 1.0 eq.). The mixture was heated to 100 °C and a vacuum of 500 mbar was applied for 5 hours to remove moisture from the reaction.

Step (β.4): Subsequently, vacuum was stopped and 1,5,7-triazabicyclo[4,4,0]dec-5-ene (0.19 g, $1.36 \cdot 10^{-3}$ mol, $5.4 \cdot 10^{-3}$ eq.) was added to the mixture, the apparatus was submitted to a nitrogen stream for 1h, followed by the addition of diethyl carbonate (147,66 g, 1.25 mol, 2.78 eq.) over a period of 1 hour through the dropping funnel. The dropping funnel was removed, and the reaction mixture was stirred at 140 °C over about 14 hours.

Step (γ'.3): The reaction mixture from step (β.4) was cooled to ambient temperature. Polyethylene glycol methyl ether, $M_n$ 750 g (187.0 g, 0.25 mol, 0.561 eq.) was added. The reaction mixture was heated to 165 °C for 2h under reflux, followed by a vacuum distillation at a pressure of maximum 75 mbar for 12 h. A light brown to brown polymer was afforded, inventive polymer (A.4). $M_n$: 14900 g/mol, $M_w$: 38900 g/mol, $M_w/M_n$: 2.6

II. Washing performance

II.1 Laundry cleaning

The primary wash performance of inventive polymers was tested in the washing machine preparing wash solutions using water of 14°dH hardness (2.5 mmol/L; Ca:Mg:$HCO_3$ 4:1:8) containing 3.0 g/L of the liquid test detergent L.1, see composition in Table 2.1 or 2.2, and 2.0% of an inventive polymer (A) according to Table 3.

Table 2.1: Ingredients of base mixture L.1 for a liquid detergent formulation

| ingredient | % by weight |
|---|---|
| Alkylbenzene sulfonic acid ($C_{10}$-$C_{13}$), Na salt | 5.5 |
| $C_{13}$/$C_{15}$-Oxoalkohol reacted with 7 moles of EO | 5.4 |
| 1,2 propylene glycol | 6 |
| ethanol | 2 |
| potassium coconut soap | 2.4 |
| Monoethanolamine | 2.5 |
| lauryl ether sulphate (C.1) | 5.4 |
| Sodium citrate | 3 |
| (D.1) - structure see below | 2 |
| Polymer (A) | 2 |
| Water | to 100 |

Table 2.2: Ingredients of base mixture L.2 for a liquid detergent formulation

| ingredient | % by weight |
|---|---|
| Alkylbenzene sulfonic acid ($C_{10}$-$C_{13}$), Na salt | 6.6 |
| $C_{13}$/$C_{15}$-Oxoalkohol reacted with 7 moles of EO | 6.5 |
| 1,2 propylene glycol | 6 |
| ethanol | 2 |
| potassium coconut soap | 2.4 |
| Triethanolamine TEA | 3.0 |
| (D.1) - structure see below | 4.6 |
| ;GDA-$Na_3$ | 2.2 |
| Water | to 100 |

(D.1):

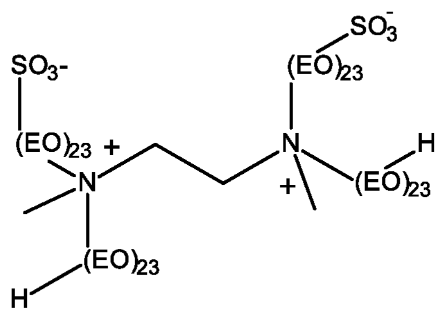

(D.1)

Inventive polymers (A) were added to a laundry liquor comprising either a liquid model composition L.1 or L.2, respectively, without polymer (additive dosage of 2.5% by weight of liquid model detergent (owod)) together with

commercially obtained stained fabrics (from Center of Test Materials CFT Vlaardingen. P-H108. Three multi-stain monitors MSM1, MSM2, and MSM3, and 5 g of commercially available soil ballast sheet wfk SBL 2004 (from wfk Testgewebe GmbH Brueggen). Washing conditions were 2.5 g/L detergent for L.1 and 2.0 g/L detergent for .L2, liquor 250 mL, 30 min, 40°C, 4-fold determination. After wash the fabrics were rinsed and dried. The fabrics were instrumentally assessed before and after wash using the MACH5 multi area color measurement instrument from ColourConsult which gives Lab readings. From these Lab readings, ΔE values were calculated between unwashed and washed stain. The higher the ΔE value, the better is the performance. To better judge on the pure cleaning effect of the respective polymer sample itself, the obtained values were further expressed in ΔΔE values vs reference without polymer (baseline correction for plain wash effect of detergent only). Again, the higher the values of ΔΔE are observed the better is the performance, respectively.

Table 3. Multi-stain monitors for the washing machine tests

MSM1 (circular stains, 5 cm diameter):
CFT PC-H144: Red pottery clay on polyester/cotton (65:35)
CFT KC-H115: Standard clay on knitted cotton
CFT PC-H145: Tennis court clay on polyester/cotton (65:35)
CFT KC-H018: Clay, ground soil on knitted cotton

MSM2:
CFT C-S-10: butterfat with colorant on cotton
CFT C-S-62: lard, colored on cotton
CFT C-S-78: soybean oil with pigment on cotton
EMPA 112: cocoa on cotton
EMPA 141/1: lipstick on cotton
EMPA 125: soiling on cotton fabric, sensitive to surfactants as well as to lipases
wfk20D: pigment and sebum-type fat on polyester/cotton mixed fabric
CFT C-S-70: chocolate/mousse cream on cotton

MSM3:
wfk20D: pigment and sebum-type fat on polyester/cotton mixed fabric
EMPA 101: cotton soiled with carbon black/olive oil
EMPA 141/2: polyester/cotton (65:35) soiled with lipstick
CFT PC-S-04: Olive oil, colored
EMPA 114: cotton soiled with red wine
EMPA 112: cotton soiled with cocoa
EMPA 116: cotton soiled with blood/milk/ink
CFT C-S-01: blood aged on cotton
CFT C-S-08: grass on cotton
CFT C-10: pigment/oil/milk on cotton
CFT PC-05: Blood/milk/ink on polyester/cotton (65:35)

The total level of cleaning was evaluated using color measurements. Reflectance values of the stains on the monitors were measured using a sphere reflectance spectrometer (SF 500 type from Datacolor, USA, wavelength range 360-700nm, optical geometry d/8°) with a UV cutoff filter at 460 nm. In this case, with the aid of the CIE-Lab color space classification, the brightness L *, the value a * on the red - green color axis and the b * value on the yellow - blue color axis, were measured before and after washing and averaged for the respective stains of the monitor. The change of the color value (Delta E, ΔE) value, defined and calculated automatically by the evaluation color tools on the following formula,

$$\Delta E^*_{ab} = \sqrt{\Delta L^{*2} + \Delta a^{*2} + \Delta b^{*2}}$$

is a measure of the achieved cleaning effect. All experiments were repeated three times to provide a representative average number.

Higher Delta E values show better cleaning. For each stain, a difference of 1 unit can be detected visually by a skilled person. A non-expert can visually detect 2 units easily. The ΔΔE values and ΔΔL values of the formulations for the 4,

8 and 11 stains of correspondingly MSM1 and MSM2 plus MSM3 and for some selected single stains are shown in Table 4.

Table 4: Results of washing machine test fabric monitors

| Formulation L.1 (2.5 g/L) plus L.2 (2.0g/L) | ΔΔE MSM1 (4 stains) with L.1 | ΔΔE MSM2 + MSM3 (8 + 11 stains) with L.2 | ΔΔL MSM1 (4 stains) with L.1 | ΔΔL MSM2 + MSM3 (8 + 11 stains) with L.2 |
|---|---|---|---|---|
| (A.1.1) | 5.12 | - | 3.5 | - |
| (A.1.2) | - | 8.45 | - | 6.04 |
| (A.2) | 8.77 | - | 6.82 | - |
| (A.3) | 12.12 | - | 7.92 | - |
| (A.4) | 13.28 | - | 8.98 | - |

III. Biodegradation tests

General: the tests were carried out in accordance with the OECD Guidelines. According to the OECD guidelines a test is valid if:

1. The reference reaches 60% within 14 days.
2. The difference of the extremes of the test replicates by the end of the test is less than 20%.
3. Oxygen uptake of inoculum blank is 20 to 30 mg $O_2$/l and must not be greater than 60 mg $O_2$/l.
4. The pH value measured at the end of the test must be between 6 and 8.5.

Description of the test method used in the context of the present invention:
Biodegradation in sewage was tested in triplicate using the OECD 301F manometric respirome-try method. OECD 301F is an aerobic test that measures biodegradation of a sewage sample by measuring the consumption of oxygen. To a measured volume of sewage, 100 mg/L test substance, which is the nominal sole source of carbon, was added along with the inoculum (aerated sludge taken from the municipal sewage treatment plant, Mannheim, Germany). This sludge was stirred in a closed flask at a constant temperature (25°C) for 28 days. The consumption of oxygen is determined by measuring the change in pressure in the closed flask using an Oxi TopC. Carbon dioxide evolved was absorbed in a solution of sodium hydroxide. Nitrification inhibitors were added to the flask to prevent consumption of oxygen due to nitrification. The amount of oxygen taken up by the microbial population during biodegradation of the test substance (corrected for uptake by a blank inoculum run in parallel) is expressed as a percentage of ThOD (theoretical oxygen demand, which is measured by the elemental analysis of the compound). A positive control glucose/glutamic acid is run along with the test samples for each cabinet as reference.

Calculations: Theoretical oxygen demand: Amount of $O_2$ required to oxidize a compound to its final oxidation products. This amount is calculated using the elemental analysis data. % Biodegradation
Experimental $O_2$ uptake x 100 and divided by the theoretical oxygen demand

The results of biodegradability tests are summarized in Table 5.

Table 5: summary of biodegradation tests

| sample | Biodegradation [%] |
|---|---|
| (A.1.1) | 56 |
| (A.1.2) | 62 |
| (A.2) | 71 |

In each test, the reference had a biodegradability of more than 60%.

## Claims

**1.** Detergent composition comprising

(A) at least one polymer comprising

(a) a core that bears one to 50 moieties of the general formula (I),

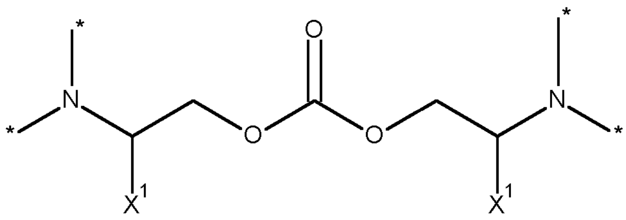

(I)

and groups of the general formula

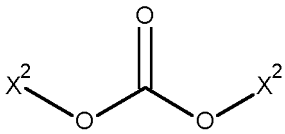

(II)

wherein the asterisk stands for another group according to general formula (I), linked though $X^2$, or for $C_1$-$C_4$-alkyl, or for a group according to formula (II), or for a polyalkylene oxide chain (b),
wherein are same or different and selected from $C_1$-$C_2$-alkyl and hydrogen,
wherein $X^2$ are same of different and selected from $C_2$-$C_6$-alkylene, straight-chain or branched, non-substituted or substituted with one or more hydroxyl groups, esters of carboxylic acids, or ether groups,

(b) polyalkylene oxide chains.

2. Composition according to claim 1 wherein polymer (A) comprises groups according to the formula $(CH_2)_{z1}$-$[N(CH_2)_{z2}]_{z4}$-$N(CH_2)_{z3}$-, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups, and wherein the free valences of the N-atoms bear chains (b).

3. Composition according to claim 1 or 2 wherein said composition additionally comprises (B) at least one hydrolase.

4. Composition according to claim 3 wherein said hydrolyse (B) is a lipase (B) that is selected from selected from triacylglycerol lipases (EC 3.1.1.3).

5. Composition according to any of the preceding claims wherein said polymer (A) has an average molecular weight $M_w$ in the range of from 2.500 to 80.000 g/mol; wherein the average molecular weight is determined by gel permeation chromatography.

6. Composition according to any of the preceding claims wherein said composition additionally comprises a surfactant.

7. Use of a composition according to any of the preceding claims for laundry care or hard surface cleaning.

8. Polymer comprising

(a) a core that bears one to 50 moieties of the general formula (I)

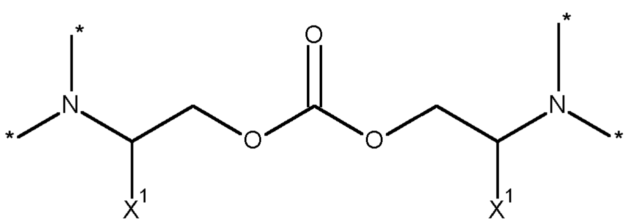

(I)

and groups of the general formula

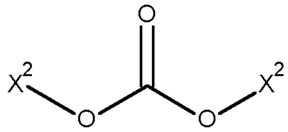

(II)

wherein the asterisk stands for another group according to general formula (I), linked though $X^2$, or for $C_1$-$C_4$-alkyl, or for a group according to formula (II), or for a polyalkylene oxide chain (b),
wherein are same or different and selected from $C_1$-$C_2$-alkyl and hydrogen,
wherein $X^2$ are same of different and selected from $C_2$-$C_6$-alkylene, straight-chain or branched, non-substituted or substituted with one or more hydroxyl groups, esters of carboxylic acids, or ether groups,

(b) polyalkylene oxide chains.

**9.** Polymer according to claim 8 having an average molecular weight $M_w$ in the range of from 2,500 to 80,000 g/mol; wherein the average molecular weight is determined by gel permeation chromatography.

**10.** Polymer according to claim 8 or 9 additionally comprising groups according to the formula $(CH_2)_{z1}$-$[N(CH_2)_{z2}]_{z4}$-$N(CH_2)_{z3}$-, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups, and wherein the free valences of the N-atoms bear chains (b).

**11.** Polymer according to any of the claims 8 to 10 wherein is selected from non-substituted $C_1$-$C_6$-alkylene, straight-chain or branched.

**12.** Process for making polymers according to any of claims 8 to 11 comprising the steps of

($\alpha$) providing a mixture comprising at least one alkoxylated amine, diamine, oligo-amine or polyamine, with at least one aliphatic $C_2$-$C_6$-diol or $C_3$-$C_6$-triol that does not bear an N atom,
($\beta$) reacting the mixture from step (a) with dialkyl carbonate,
($\gamma$) reacting the carbonate from step ($\beta$) with at least one $C_2$-$C_4$-alkylene oxide in one or more steps, or, in the alternative,
($\gamma$') reacting the carbonate from step ($\beta$) with a polyalkylene oxide that is capped with a $C_1$-$C_{10}$-alkyl group or esterified with an aliphatic $C_2$-$C_{20}$-alkyl fatty acid or with a $C_{10}$-$C_{20}$-alkenyl fatty acid.

**13.** Process according to claim 12 wherein, in step ($\beta$), the mixture from step ($\alpha$) is reacted with di-$C_1$-$C_2$-alkyl carbonate.

**14.** Process according to claim 12 or 13 wherein the mixture provided in step (a) comprises an alkoxylated amine based on the formula $H_2N$-$(CH_2)_{z1}$-$[NH(CH_2)_{z2}]_{z4}$-$NH(CH_2)_{z3}$-$NH_2$, wherein the variables z1, z2 and z3 are independently from each other selected from 2 to 4 and wherein z4 is selected from zero to 2, and wherein each $CH_2$-group may be non-substituted or substituted with one to 2 methyl or methoxy groups.

**15.** Method of improving the cleaning performance of a liquid detergent composition by adding a polymer (A) according to claims 8 to 11 to a detergent composition that comprises at least one lipase and/or at least one protease.

**Patentansprüche**

**1.** Waschmittelzusammensetzung, umfassend

mindestens ein Polymer, das
einen Kern aufweist, der ein bis fünfzig Reste der allgemeinen Formel (I) trägt,

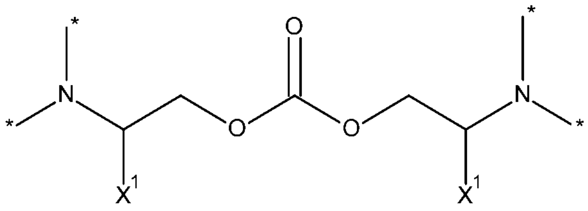

(I)

und Gruppen der allgemeinen Formel

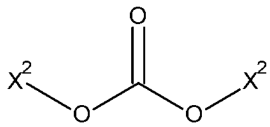

(II)

wobei das Sternchen für eine weitere Gruppe gemäß der allgemeinen Formel (I) steht, verbunden über $X^2$, oder für $C_1$-$C_4$-Alkyl, oder für eine Gruppe gemäß Formel (II), oder für eine Polyalkylenoxidkette (b),
wobei $X_1$ gleich oder verschieden ist und ausgewählt aus $C_1$-$C_2$-Alkyl und Wasserstoff,
wobei $X_2$ gleich oder verschieden ist und ausgewählt aus $C_2$-$C_6$-Alkylen, unverzweigt oder verzweigt, unsubstituiert oder substituiert mit einer oder mehreren Hydroxylgruppen, Estern von Carbonsäuren oder Ethergruppen, Polyalkylenoxidketten.

**2.** Zusammensetzung nach Anspruch 1, wobei das Polymer (A) Gruppen gemäß der Formel

$$(CH_2)z_1\text{-}[N(CH_2)z_2]z_4\text{-}N(CH_2)z_3\text{-}$$

umfasst, wobei die Variablen $z_1$, $z_2$ und $z_3$ unabhängig voneinander aus 2 bis 4 ausgewählt sind und wobei $z_4$ aus null bis 2 ausgewählt ist, und wobei jede $CH_2$-Gruppe unsubstituiert oder substituiert mit ein bis zwei Methyl- oder Methoxygruppen sein kann, und wobei die freien Valenzen der N-Atome Ketten (b) tragen.

**3.** Zusammensetzung nach Anspruch 1 oder 2, wobei die Zusammensetzung zusätzlich mindestens eine Hydrolase umfasst.

**4.** Zusammensetzung nach Anspruch 3, wobei die Hydrolase (B) eine Lipase (B) ist, die ausgewählt ist aus Triacylglycerol-Lipasen (EC 3.1.1.3).

**5.** Zusammensetzung nach einem der vorhergehenden Ansprüche, wobei das Polymer (A) ein mittleres Molekulargewicht Mw im Bereich von 2.500 bis 80.000 g/mol aufweist; wobei das mittlere Molekulargewicht mittels Gelpermeationschromatographie bestimmt wird.

**6.** Zusammensetzung nach einem der vorhergehenden Ansprüche, wobei die Zusammensetzung zusätzlich ein Tensid umfasst.

**7.** Verwendung einer Zusammensetzung nach einem der vorhergehenden Ansprüche zur Wäschepflege oder zur Reinigung harter Oberflächen.

**8.** Polymer, umfassend

einen Kern, der ein bis fünfzig Reste der allgemeinen Formel (I) trägt,

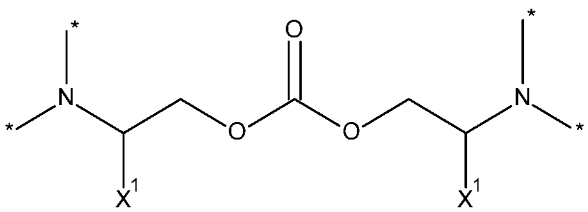

(I)

und Gruppen der allgemeinen Formel

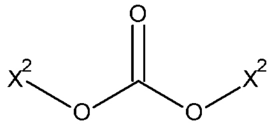

(II)

wobei das Sternchen für eine weitere Gruppe gemäß der allgemeinen Formel (I) steht, verbunden über $X_2$, oder für $C_1$-$C_4$-Alkyl, oder für eine Gruppe gemäß Formel (II), oder für eine Polyalkylenoxidkette (b), wobei $X_1$ gleich oder verschieden ist und ausgewählt aus $C_1$-$C_2$-Alkyl und Wasserstoff, wobei $X_2$ gleich oder verschieden ist und ausgewählt aus $C_2$-$C_6$-Alkylen, unverzweigt oder verzweigt, unsubstituiert oder substituiert mit einer oder mehreren Hydroxylgruppen, Estern von Carbonsäuren oder Ethergruppen, Polyalkylenoxidketten.

**9.** Polymer nach Anspruch 8, mit einem mittleren Molekulargewicht Mw im Bereich von 2.500 bis 80.000 g/mol; wobei das mittlere Molekulargewicht mittels Gelpermeationschromatographie bestimmt wird.

**10.** Polymer nach Anspruch 8 oder 9, zusätzlich umfassend Gruppen gemäß der Formel

$$(CH_2)z_1\text{-}[N(CH_2)z_2]z_4\text{-}N(CH_2)z_3\text{-},$$

wobei die Variablen $z_1$, $z_2$ und $z_3$ unabhängig voneinander aus 2 bis 4 ausgewählt sind und wobei $z_4$ aus null bis 2 ausgewählt ist, und wobei jede $CH_2$-Gruppe unsubstituiert oder substituiert mit ein bis zwei Methyl- oder Methoxygruppen sein kann, und wobei die freien Valenzen der N-Atome Ketten (b) tragen.

**11.** Polymer nach einem der Ansprüche 8 bis 10, wobei $X_1$ ausgewählt ist aus unsubstituiertem $C_1$-$C_6$-Alkylen, unverzweigt oder verzweigt.

**12.** Verfahren zur Herstellung von Polymeren nach einem der Ansprüche 8 bis 11, umfassend die Schritte:

($\alpha$) Bereitstellen einer Mischung, die mindestens ein alkoxyliertes Amin, Diamin, Oligoamin oder Polyamin mit mindestens einem aliphatischen $C_2$-$C_6$-Diol oder $C_3$-$C_6$-Triol, das kein N-Atom trägt, umfasst,
($\beta$) Umsetzen der Mischung aus Schritt ($\alpha$) mit Dialkylcarbonat,
($\gamma$) Umsetzen des Carbonats aus Schritt ($\beta$) mit mindestens einem $C_2$-$C_4$-Alkylenoxid in einem oder mehreren Schritten, oder alternativ
($\gamma$') Umsetzen des Carbonats aus Schritt ($\beta$) mit einem Polyalkylenoxid, das mit einer $C_1$-$C_{10}$-Alkylgruppe endständig versehen oder mit einer aliphatischen $C_2$-$C_{20}$-Alkylfettsäure oder mit einer $C_{10}$-$C_{20}$-Alkenylfettsäure verestert ist.

**13.** Verfahren nach Anspruch 12, wobei in Schritt ($\beta$) die Mischung aus Schritt ($\alpha$) mit Di-$C_1$-$C_2$-Alkylcarbonat umgesetzt wird.

**14.** Verfahren nach Anspruch 12 oder 13, wobei die in Schritt ($\alpha$) bereitgestellte Mischung ein alkoxyliertes Amin umfasst, basierend auf der Formel

$$H_2N\text{-}(CH_2)z_1\text{-}[NH(CH_2)z_2]z_4\text{-}NH(CH_2)z_3\text{-}NH_2,$$

wobei die Variablen $z_1$, $z_2$ und $z_3$ unabhängig voneinander aus 2 bis 4 ausgewählt sind und wobei $z_4$ aus null bis 2 ausgewählt ist, und wobei jede $CH_2$-Gruppe unsubstituiert oder substituiert mit ein bis zwei Methyl- oder Methoxygruppen sein kann.

**15.** Verfahren zur Verbesserung der Reinigungsleistung einer flüssigen Waschmittelzusammensetzung durch Zugabe eines Polymers (A) gemäß den Ansprüchen 8 bis 11 zu einer Waschmittelzusammensetzung, die mindestens eine Lipase und/oder mindestens eine Protease umfasst.

## Revendications

**1.** Composition détergente comprenant

au moins un polymère comprenant
un noyau portant de une à 50 unités de la formule générale (I),

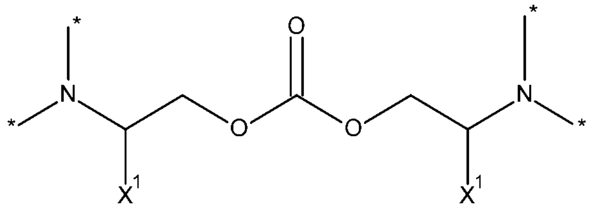

(I)

et des groupes de la formule générale

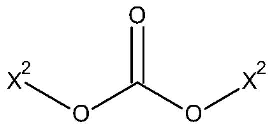

(II)

dans laquelle l'astérisque représente un autre groupe selon la formule générale (I), lié via $X_2$, ou un groupe alkyle $C_1$-$C_4$, ou un groupe selon la formule (II), ou une chaîne de polyoxyde d'alkylène (b),
dans laquelle $X_1$ sont identiques ou différents et choisis parmi l'alkyle $C_1$-$C_2$ et l'hydrogène,
dans laquelle $X_2$ sont identiques ou différents et choisis parmi les groupes alkylène $C_2$-$C_6$, linéaires ou ramifiés, non substitués ou substitués par un ou plusieurs groupes hydroxyle, esters d'acides carboxyliques ou groupes éther,
chaînes de polyoxyde d'alkylène.

**2.** Composition selon la revendication 1, dans laquelle le polymère (A) comprend des groupes selon la formule

$$(CH_2)z_1\text{-}[N(CH_2)z_2]z_4\text{-}N(CH_2)z_3\text{-},$$

dans laquelle les variables $z_1$, $z_2$ et $z_3$ sont indépendamment choisies entre 2 et 4 et $z_4$ est choisi entre zéro et 2, et dans laquelle chaque groupe $CH_2$ peut être non substitué ou substitué par un à deux groupes méthyle ou méthoxy, et dans laquelle les valences libres des atomes d'azote portent des chaînes (b).

**3.** Composition selon la revendication 1 ou 2, dans laquelle ladite composition comprend en outre au moins une hydrolase.

**4.** Composition selon la revendication 3, dans laquelle ladite hydrolase (B) est une lipase (B) choisie parmi les lipases de triacylglycérol (EC 3.1.1.3).

**5.** Composition selon l'une quelconque des revendications précédentes, dans laquelle le polymère (A) présente une masse moléculaire moyenne Mw comprise entre 2 500 et 80 000 g/mol, la masse moléculaire moyenne étant déterminée par chromatographie par perméation de gel.

**6.** Composition selon l'une quelconque des revendications précédentes, dans laquelle ladite composition comprend en outre un tensioactif.

**7.** Utilisation d'une composition selon l'une quelconque des revendications précédentes pour l'entretien du linge ou le nettoyage des surfaces dures.

**8.** Polymère comprenant

un noyau portant de une à 50 unités de la formule générale (I)

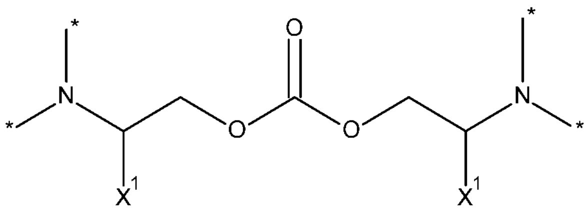

(I)

et des groupes de la formule Générale

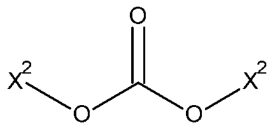

(II)

dans laquelle l'astérisque représente un autre groupe selon la formule générale (I), lié via $X_2$, ou un groupe alkyle $C_1$-$C_4$, ou un groupe selon la formule (II), ou une chaîne de polyoxyde d'alkylène (b),
dans laquelle $X_1$ sont identiques ou différents et choisis parmi l'alkyle $C_1$-$C_2$ et l'hydrogène,
dans laquelle $X_2$ sont identiques ou différents et choisis parmi les groupes alkylène $C_2$-$C_6$, linéaires ou ramifiés, non substitués ou substitués par un ou plusieurs groupes hydroxyle, esters d'acides carboxyliques ou groupes éther,
chaînes de polyoxyde d'alkylène.

**9.** Polymère selon la revendication 8 présentant une masse moléculaire moyenne Mw comprise entre 2 500 et 80 000 g/mol, la masse moléculaire moyenne étant déterminée par chromatographie par perméation de gel.

**10.** Polymère selon la revendication 8 ou 9 comprenant en outre des groupes selon la formule

$$(CH_2)z_1\text{-}[N(CH_2)z_2]z_4\text{-}N(CH_2)z_3\text{-},$$

dans laquelle les variables $z_1$, $z_2$ et $z_3$ sont indépendamment choisies entre 2 et 4 et $z_4$ est choisi entre zéro et 2, et dans laquelle chaque groupe $CH_2$ peut être non substitué ou substitué par un à deux groupes méthyle ou méthoxy, et dans laquelle les valences libres des atomes d'azote portent des chaînes (b).

**11.** Polymère selon l'une quelconque des revendications 8 à 10, dans laquelle $X_1$ est choisi parmi les groupes alkylène $C_1$-$C_6$ non substitués, linéaires ou ramifiés.

**12.** Procédé de fabrication de polymères selon l'une quelconque des revendications 8 à 11, comprenant les étapes suivantes :

($\alpha$) fournir un mélange comprenant au moins une amine, diamine, oligoamine ou polyamine alkoxylée, avec au moins un diol aliphatique $C_2$-$C_6$ ou un triol $C_3$-$C_6$ ne portant pas d'atome d'azote,
($\beta$) faire réagir le mélange de l'étape ($\alpha$) avec un dialkylcarbonate,
($\gamma$) faire réagir le carbonate de l'étape ($\beta$) avec au moins un oxyde d'alkylène $C_2$-$C_4$ en une ou plusieurs étapes, ou, en variante,
($\gamma$') faire réagir le carbonate de l'étape ($\beta$) avec un polyoxyde d'alkylène terminé par un groupe alkyle $C_1$-$C_{10}$ ou estérifié avec un acide gras aliphatique $C_2$-$C_{20}$ ou avec un acide gras alcénylique $C_{10}$-$C_{20}$.

**13.** Procédé selon la revendication 12, dans lequel, à l'étape ($\beta$), le mélange de l'étape ($\alpha$) est mis en réaction avec un di-$C_1$-$C_2$-alkylcarbonate.

**14.** Procédé selon la revendication 12 ou 13, dans lequel le mélange fourni à l'étape ($\alpha$) comprend une amine alkoxylée basée sur la formule

$$H_2N\text{-}(CH_2)z_1\text{-}[NH(CH_2)z_2]z_4\text{-}NH(CH_2)z_3\text{-}NH_2,$$

dans laquelle les variables $z_1$, $z_2$ et $z_3$ sont indépendamment choisies entre 2 et 4 et $z_4$ est choisi entre zéro et 2, et dans laquelle chaque groupe $CH_2$ peut être non substitué ou substitué par un à deux groupes méthyle ou méthoxy.

**15.** Procédé d'amélioration des performances de nettoyage d'une composition détergente liquide par addition d'un polymère (A) selon les revendications 8 à 11 à une composition détergente comprenant au moins une lipase et/ou au moins une protéase.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022008416 A1
- WO 2021105336 A1
- WO 2015091160 A
- EP 3266858 A1
- EP 3226858 A1
- EP 258068 A
- EP 305216 A
- WO 9205249 A
- WO 2009109500 A
- WO 9613580 A
- EP 218272 A
- WO 9425578 A
- WO 9530744 A
- WO 9535381 A
- WO 9600292 A
- EP 331376 A
- GB 1372034 A
- WO 9506720 A
- WO 9627002 A
- WO 9612012 A
- WO 9514783 A
- WO 2011150157 A
- WO 2012137147 A
- WO 2010065455 A
- WO 2011084412 A
- WO 2011084417 A
- WO 0060063 A
- WO 2011084599 A
- JP 64074992 B
- WO 9116422 A
- WO 9401541 A
- US 5869438 A
- EP 283075 A2
- WO 8906279 A
- WO 9102792 A
- WO 9523221 A
- DE 10064983
- WO 2003054184 A
- WO 2003056017 A
- WO 2003055974 A
- WO 2005063974 A
- WO 2005103244 A
- DE 102005028295
- EP 1921147 A


### Non-patent literature cited in the description


- **NEEDLEMAN** ; **WUNSCH**. *J. Mol. Biol.*, 1979, vol. 48, 443-453
- **DARTOIS et al.** *Biochemica et Biophysica Acta*, 1992, vol. 1131, 253-360
- **GUPTA et al.** *Biotechnol. Appl. Biochem.*, 2003, vol. 37, 63-71
- **GUPTA et al.** *Appl. Microbiol. Biotechnol*, 2002, vol. 60, 381-395
- **DELMAR et al.** *Analytical Biochem*, 1979, vol. 99, 316-320
- **VASANTHA et al.** *J. Bacteriol*, 1984, vol. 159, 811-819
- **JA WELLS et al.** *Nucleic Acids Research*, 1983, vol. 11, 7911-7925
- **EL SMITH et al.** *J. Biol Chem*, 1968, vol. 243, 2184-2191
- **JACOBS et al.** *Nucl. Acids Res*, 1985, vol. 13, 8913-8926